# EUROPÄISCHE PATENTSCHRIFT

(11) **EP 2 960 872 B1**
(45) Veröffentlichungstag und Bekanntmachung des Hinweises auf die Patenterteilung: **01.10.2025**
(21) Anmeldenummer: 15173779.8
(22) Anmeldetag: 25.06.2015
(51) Int. Cl.: G07C 9/27, G06Q 10/02, G07F 17/12

(54) **RESERVIERUNG FUER SCHLIESSFACHANALAGEN**
RESERVATION OF LOCKER SYSTEM
RÉSERVATION D'UN SYSTÈME DE CASIER

(30) Priorität: 25.06.2014 DE 102014108921
(43) Veröffentlichungstag der Anmeldung: 30.12.2015
(73) Patentinhaber: Deutsche Post AG, 53113 Bonn (DE)
(72) Erfinder: Krause, Marco, 53127 Bonn (DE); Gaudszuhn, Henning, 50935 Köln (DE)
(74) Vertreter: Cohausz & Florack

(56) Entgegenhaltungen:
- EP-A1- 1 921 586
- WO-A1-00/51750
- WO-A1-02/07119
- DE-A1- 102006 047 797
- US-A1- 2002 035 515

## Beschreibung

### Gebiet

Beispielhafte Ausführungsformen der Erfindung betreffen ein System zum Betreiben von mindestens einer elektronischen Schließfachanlage, wobei jede Schließfachanlage eine Mehrzahl von Schließfacheinheiten umfasst, Komponenten des Systems und von diesen Komponenten ausgeführte Verfahren.

### Hintergrund

Möchte derzeit eine Partei eine Sendung in einer elektronischen Schließfachanlage, wie beispielsweise einer Packstation, einstellen, so muss für diese Partei ein bestimmtes Schließfach reserviert werden.

Dieses Vorgehen ist jedoch sehr starr und unflexibel und führt dazu, dass weit mehr Schließfacheinheiten reserviert werden als letztendlich tatsächlich genutzt werden und somit ungenutzte Schließfacheinheitenkapazitäten entstehen.

DE 10 2006 047797 A1 ist ein Beispiel zum Betreiben einer Schließfachanlage zur Einstellung und Abholung von Gegenständen.

### Zusammenfassung einiger beispielhafter Ausführungsformen der Erfindung

Die vorliegende Erfindung hat sich daher die Aufgabe gestellt, dieses Problem zu überwinden.

Gemäß einem ersten Aspekt der Erfindung wird ein Verfahren zum Betreiben von mindestens einer elektronischen Schließfachanlage, wobei jede Schließfachanlage eine Mehrzahl von Schließfacheinheiten umfasst, offenbart, das folgendes umfasst:
- Ermitteln einer Information über mindestens eine Schließfacheinheit einer Schließfachanlage der mindestens einen Schließfachanlage, in welche eine einer Partei zugeordnete Sendung deponiert werden soll, durch eine Rechenverarbeitungseinheit, basierend auf einer der Partei zugeordneten Reservierungsinformation für diese Schließfachanlage, wobei die der Partei zugeordnete Reservierungsinformation eine fachtypbezogene Information enthält, die für jeden Schließfachtyp von mindestens einem Schließfachtyp der Schließfachanlage eine Information über die Anzahl von dynamisch reservierten Schließfacheinheiten des Schließfachtyps umfasst,
- Auswahl einer Schließfacheinheit der mindestens einen Schließfacheinheit basierend auf der ermittelten bereitgestellten Information;
- Erfassen eines der in die Schließfachanlage zu deponierenden Sendung physisch zugeordneten Identifikators durch Detektionsmittel; und
- Verknüpfen des erfassten Identifikators der Sendung mit der ausgewählten Schließfacheinheit.

Gemäß einem zweiten Aspekt der Erfindung wird ein Verfahren zum Betreiben von mindestens einer elektronischen Schließfachanlage offenbart, wobei das Verfahren das folgende umfasst:
- Empfangen einer einer Partei zugeordneten elektronischen Anfrage zur dynamischen Reservierung einer bestimmten Anzahl von Schließfacheinheiten eines Schließfachtyps einer Schließfachanlage von mindestens einer Schließfachanlage,
- Prüfen, ob die angefragte Anzahl von Schließfacheinheiten des Schließfachtyps für die Partei verfügbar ist, und
- falls die angefragte Anzahl von Schließfacheinheiten des Schließfachtyps für die Partei verfügbar ist, Anpassung einer der Partei und der Schließfachanlage zugeordneten Reservierungsinformation, welche eine fachtypbezogene Information umfasst, wobei die fachtypbezogene Information für den Schließfachtyp der Schließfachanlage eine Information über die Anzahl von dynamisch reservierten Schließfacheinheiten des Schließfachtyps umfasst, zur dynamischen Reservierung der bestimmen Anzahl von Schließfacheinheiten des Schließfachtyps der Schließfachanlage.

Gemäß jedem dieser Aspekte der Erfindung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon.
- Eine Vorrichtung, eingerichtet zur Ausführung und/oder Steuerung des Verfahrens gemäß dem jeweiligen Aspekt der Erfindung oder umfassend jeweilige Mittel zur Ausführung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, die Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder ein oder mehrere Schritte gesteuert und ein oder mehrere Schritte ausgeführt werden.

Die Vorrichtung kann beispielsweise die Rechenverarbeitungsanlage einer Schließfachanlage der mindestens einen Schließfachanlage oder einen Server, welcher mit der Schließfachanlage über eine Kommunikationsverbindung verbindbar ist, umfassen. Somit kann beispielsweise der Verfahren gemäß dem ersten Aspekt und/oder das Verfahren gemäß dem zweiten Aspekt beispielsweise, zumindest teilweise oder ganz, durch eine Rechenverarbeitungseinheit einer Schließfacheinheit ausgeführt werden, und/oder zumindest teilweise oder ganz durch eine Rechenverarbeitungseinheit des Servers durchgeführt werden.

Jede Schließfachanlage der mindestens einen Schließfachanlage umfasst eine Mehrzahl von Schließfacheinheiten. Jeder der Schließfacheinheit der Mehrzahl von Schließfacheinheiten ist beispielsweise ein Verschlußmittel zugeordnet, welches dazu eingerichtet ist, die jeweilige Schließfacheinheit zu öffnen oder zu verschließen. Das Verschlußmittel kann über ein elektrisches Signal gesteuert werden, wobei beispielsweise eine Schließfachanlage eine Steuerungseinheit zur Ansteuerung der Verschlußmittel der Schließfacheinheiten aufweist.

Eine Schließfachanlage der mindestens einen Schließfachanlage kann verschiedene Typen von Schließfacheinheiten umfassen, wobei sich die verschiedenen Schließfachtypen beispielsweise in der Form und/oder in der Größe unterschieden. So kann beispielsweise mindestens eine Schließfacheinheit einer Schließfachanlage einem ersten Schließfachtyp zugeordnet sein, und es kann mindestens eine Schließfacheinheit dieser Schließfachanlage einem zweitem Schließfachtyp zugeordnet sein, und es kann beispielweise mindestens eine Schließfacheinheit dieser Schließfachanlage einem dritten Schließfachtyp zugeordnet sein, wobei beispielsweise der erste Schließfachtyp beispielsweise eine kleine Größe aufweisen kann, der zweite Schließfachtyp beispielsweise eine mittlere Größe aufweisen kann und der dritte Schließfachtyp beispielsweise eine große Größe aufweisen kann. Es versteht sich, dass die Erfindung nicht auf genau drei verschiedene Schließfachtypen beschränkt ist, sondern jegliche Anzahl von mindestens zwei verschiedenen Schließfachtypen umfassen kann.

Eine Schließfachanlage der mindestens einen Schließfachanlage kann beispielsweise über ein Datennetz mit einem Server verbunden sein, wobei der Server dazu eingerichtet sein kann, eine Schließfachanlage der mindestens einen Schließfachanlage zu steuern. Dieses Datennetz kann beispielsweise das Internet umfassen und/oder andere Datennetze umfassen.

Möchte eine Partei eine Sendung in eine Schließfacheinheit einer Schließfachanlage deponieren, so geschieht dies basierend auf einer der Partei zugeordneten Reservierungsinformation für diese Schließfachanlage, welche beispielsweise in dem Server und/oder in einem Speicher der entsprechenden Schließfachanlage gespeichert sein kann. Diese der Partei und der Schließfachanlage zugeordnete Reservierungsinformation umfasst eine fachtypbezogene Information, die für jeden Schließfachtyp von mindestens einem Schließfachtyp der entsprechenden Schließfachanlage eine Information über die Anzahl von dynamisch reservierten Schließfacheinheiten des Schließfachtyps enthält. Somit kann eine Partei vorab für eine bestimmte Schließfachanlage eine Anzahl von Schließfacheinheiten eines Schließfachtyps reservieren. Auf diese Reservierung wird im zweiten Aspekt der Erfindung detailliert eingegangen. Beispielsweise kann eine Partei elektronisch über eine Schnittstelle auf den Server zugreifen und dort eine entsprechende fachtypbezogene Information für einen Schließfachtyp oder mehrere Schließfachtypen einer Schließfachanlage speichern.

Eine Sendung kann beispielsweise ein Paket darstellen, aber auch jeglicher anderer Gegenstand darstellen, der in einer Schließfacheinheit einer Schließfachanlage deponiert werden soll, beispielsweise zur Übergabe des Gegenstands von einer Partei an einen Empfänger.

Die Anzahl von Schließfacheinheiten kann eine Anzahl von genau eins bedeuten oder auch eine Anzahl von zwei oder mehr Schließfacheinheiten sein. Diese der Partei und der Schließfachanlage zugeordnete fachtypbezogene Information, welche für jeden Schließfachtyp von mindestens einem Schließfachtyp der entsprechenden Schließfachanlage eine Information über die Anzahl von dynamisch reservierten Schließfacheinheiten des Schließfachtyps umfasst, beinhaltet keine Zuordnung zu einer bestimmten oder mehreren bestimmten Schließfacheinheiten des Schließfachtyps; im Ergebnis wird lediglich eine Anzahl von Schließfacheinheiten des jeweiligen Schließfachtyps an der jeweiligen Schließfachanlage für die Partei reserviert, ohne dass hierbei konkrete Zuordnung zu Schließfacheinheiten der Schließfachanlage vorgenommen wird.

Gemäß dem ersten Aspekt der Erfindung wird, wenn eine Partei eine Sendung in eine Schließfacheinheit einer Schließfachanlage deponieren möchte, eine Information über mindestens eine Schließfacheinheit einer Schließfachanlage der mindestens einen Schließfachanlage, in welche eine einer Partei zugeordnete Sendung deponiert werden soll, durch eine Datenverarbeitungseinheit bereitgestellt, basierend auf einer der Partei zugeordneten Reservierungsinformation für diese Schließfachanlage. Diese Datenverarbeitungseinheit kann beispielsweise in der Schließfachanlage angeordnet sein oder auch im Server angeordnet sein. Diese Information über mindestens eine Schließfacheinheit einer Schließfachanlage der mindestens einen Schließfachanlage, in welche eine einer Partei zugeordnete Sendung deponiert werden soll, kann beispielsweise nur die zuvor genannte fachtypbezogene Information umfassen oder aber alternativ auch weitere Informationen umfassen.

Basierend auf dieser ermittelten Information über mindestens eine Schließfacheinheit einer Schließfachanlage der mindestens einen Schließfachanlage, in welche eine einer Partei zugeordnete Sendung deponiert werden soll, wird eine Schließfacheinheit der mindestens einen Schließfacheinheit der Schließfachanlage ausgewählt. Dieser Vorgang des Auswählens kann zumindest durch Unterstützung der Datenverarbeitungseinheit der Schließfachanlage und/ oderder Datenverarbeitungseinheit des Servers erfolgen. Bei der Auswahl einer Schließfacheinheit der mindestens einen Schließfacheinheit kann somit die Reservierungsinformation der Partei, welche die fachtypbezogene Information umfasst, für diese Schließfachanlage berücksichtigt werden. Weil die fachtypbezogene Information keine Zuordnung zu einer bestimmten Schließfacheinheit oder mehreren bestimmten Schließfacheinheit der Schließfachanlage umfasst, muss bei der Reservierung anhand der fachtypbezogenen Information keine bestimmte Schließfacheinheit der Schließfachanlage vorab reserviert werden, sondern es wird beispielsweise lediglich die Anzahl der Schließfacheinheiten für den jeweiligen reservierten Schließfachtyp der Schließfachanlage vorab reserviert, so dass beispielsweise der Server und/oder die entsprechende Schließfachanlage sicherstellt, dass zumindest die reservierte Anzahl der Schließfacheinheiten für den jeweiligen reservierten Schließfachtyp der Schließfachanlage für die Partei freigehalten wird, wobei dieses Freihalten beispielsweise von weiteren Faktoren wie der Priorität von Parteien und/oder einem bestimmten Zeitpunkt, bis zu dem die Reservierung gelten soll, abhängen kann. Dies kann den Vorteil aufzeigen, dass vorab keine bestimmte Schließfacheinheit für eine Sendung reserviert wird und somit durch diese Reservierung blockiert ist, so dass eine Zuordnung einer Sendung beispielsweise erst beim Deponieren der Sendung in der entsprechenden Schließfachanlage erfolgt. Somit kann beispielsweise vermieden werden, dass sich eine fest für eine Sendung reservierte Schließfacheinheit beim Versuch des Deponierens in der Schließfachanlage als defekt erweist und ein Deponieren der Sendung in der Schließfachanlage daher nicht mehr möglich ist, weil lediglich die Anzahl der Schließfacheinheiten von dem jeweiligen Schließfachtyp der Schließfachanlage reserviert wird.

Somit erfolgt das Auswählen einer Schließfacheinheit der mindestens einen Schließfacheinheit der Schließfachanlage zeitlich nachfolgend zu der Vornahme einer Reservierung basierend auf der fachtypbezogenen Information. Beispielweise erfolgt dieses Auswählen erst dann, wenn die Partei die Sendung in der entsprechenden Schließfachanlage vor Ort deponieren möchte, wie beispielsweise nach einer Anmeldung bzw. Identifikation der Partei an der entsprechenden Schließfachanlage oder an dem Server zum nachfolgenden Deponieren der Sendung in der Schließfachanlage.

Ferner erfolgt ein Erfassen eines in der Schließfachanlage zu deponierenden Sendung physisch zugeordneten Identifikators, wie beispielsweise einer auf der Sendung aufgebrachten Kennung der Sendung, welche beispielsweise einen Barcode oder ein alphanumerischer Aufdruck oder ein anderweitig geeigneter Identifikator sein kann. Diese Kennung kann beispielsweise eine Sendungs-ID darstellen, mit welcher sich die Sendung nachverfolgen lässt. Beispielweise kann die Schließfachanlage Mittel zum Erfassen dieses der Sendung physisch zugeordneten Identifkators umfassen, wie beispielweise einen Scanner oder ein anderes geeignetes Mittel, oder aber es kann ein mobiles Endgerät vorgesehen sein, welches diese Mittel zum Erfassen dieses der Sendung physisch zugeordneten Identifkators umfasst, wobei das mobile Endgerät den erfassten Identifikator beispielsweise über eine vorzugsweise drahtlos ausgebildete Kommunikationsverbindung an die Schließfachanlage übermitteln kann und/oder den erfassten Identifkator beispielweise über eine vorzugsweise drahtlose ausgebildete Kommunikationsverbindung an den Server übermitteln kann.

Nach der Auswahl einer Schließfacheinheit der Schließfachanlage wird beispielsweise diese Schließfacheinheit automatisch durch die Schließfachanlage geöffnet oder es kann beispielsweise auf den Anzeigemitteln der Schließfachanlage eine Information ausgegeben werden, welche Schließfacheinheit der Schließfachanlage zur Deponierung der Sendung verwenden werden soll, so dass die Partei die Sendung in die geöffnete Schließfacheinheit oder in die angezeigte Schließfacheinheit deponieren kann.

Ferner erfolgt ein Verknüpfen des erfassten Identifikators der Sendung mit der ausgewählten Schließfacheinheit. Somit erfolgt eine Zuordnung der Sendung mit der ausgewählten Schließfacheinheit der Schließfachanlage erst beim Deponiervorgang der Sendung an der Schließfacheinheit, nicht jedoch bei der vorangegangenen dynamischen Reservierung.

In einer beispielhaften Ausführungsform sämtlicher Aspekte der Erfindung umfasst die Schließfachanlage der mindestens einen Schließfachanlage jeweils eine Mehrzahl von unterschiedlichen Schließfachtypen umfasst, welche sich vorzugsweise in der Größe voneinander unterscheiden.

In einer beispielhaften Ausführungsform sämtlicher Aspekte der Erfindung umfasst die der Partei zugeordnete Reservierungsinformation eine Information über mindestens eine statisch reservierte Schließfacheinheit der Schließfachanlage.

Somit kann beispielsweise eine Partei zusätzlich zur fachtypbezogenen Reservierung, welche keine Reservierung einer bestimmten Schließfacheinheit einer Schließfachanlage umfasst, auch mindestens eine Schließfacheinheit der Schließfachanlage fest und somit statisch reservieren. Bei dieser statischen Reservierung mindestens einer Schließfacheinheit einer Schließfachanlage erfolgt jedoch während des Reservierungsvorgangs keine Zuordnung des statisch reservierten Schließfaches zu einer Sendung, sondern es wird lediglich die mindestens eine statisch reservierte Schließfacheinheit der Schließfachanlage für die entsprechende Partei reserviert. Die Menge von statisch reservierten Schließfacheinheiten einer Schließfachanlage reduziert die Anzahl der potentiell zur Verfügung stehenden dynamisch reservierbaren Schließfacheinheiten eines Schließfachtyps. Eine statische Reservierung einer Schließfacheinheit kann beispielsweise im Gegensatz zur dynamischen Reservierung einer Anzahl von Schließfacheinheiten eines Schließfachtyps bestehen bleiben, so dass der entsprechenden fortwährend die statisch reservierten Schließfacheinheiten einer Schließfachanlage zur Verfügung stehen.

In einer beispielhaften Ausführungsform des ersten Aspekts der Erfindung umfasst das Verfahren das Anzeigen einer Anzahl für die Partei zur Verfügung stehenden Schließfacheinheiten der Schließfachanlage für jeweils mindestens einen Schließfachtyp basierend auf der Information über mindestens einen Schließfacheinheit einer Schließfachanlage auf mindestens einer Anzeige von folgenden Anzeigen: (i) eine Anzeige der Schließfachanlage; und (ii) eine Anzeige auf einem mobilen elektronischen Gerät, welches zur Nutzung einer Partei eingerichtet ist.

Der Partei kann somit für einen Schließfachtyp der Schließfachanlage oder auch für mehrere Schließfachtypen der Schließfachanlage angezeigt werden, wieviele Schließfacheinheiten des jeweiligen Schließfachtyps der Partei zum Deponieren von Sendungen zur Verfügung stehen. Beispielsweise kann vorab eine Identifikation der Partei an der Schließfachanlage oder an dem Server erfolgen.

In einer beispielhaften Ausführungsform des ersten Aspekts der Erfindung erfolgt die Auswahl einer Schließfacheinheit der mindestens einen Schließfacheinheit der Schließfachanlage zumindest teilweise basierend auf der für die Partei angezeigten Anzahl der für die Partei zur Verfügung stehenden Schließfacheinheiten der Schließfachanlage für jeweils mindestens einen Schließfachtyp durch Detektion einer Interaktion eines Zustellers mit der Schließfachanlage.

Somit kann beispielsweise die Partei, basierend auf der ihr angezeigten Anzahl der ihr zur Verfügung stehenden Schließfacheinheiten für einen jeweiligen Schließfachtyp (oder für mehrere verschiedene Schließfachtypen), entscheiden, welcher Schließfachtyp für die zu deponierende Sendung verwendet werden soll, und die Auswahl durch eine entsprechende Eingabe an der Eingabeschnittstelle der Schließfachanlage oder an einer entsprechenden Eingabeschnittstelle (nicht dargestellt) des mobilen Endgeräts eingeben. Das Erfassen einer Auswahl eines Schließfachtyps kann daher einen Teil des Schritts zum Auswählen einer Schließfacheinheit darstellen.

Nachdem der Schließfachtyp ermittelt worden ist, kann die endgültige Auswahl einer Schließfacheinheit des ausgewählten Schließfachtyps durchgeführt werden, in welche die Sendung zu deponieren ist. Dies kann beispielsweise durch die Rechenverarbeitungseinheit der entsprechenden Schließfachanlage oder durch den Server durchgeführt werden. Alternativ kann die Auswahl einer Schließfacheinheit des ausgewählten Schließfachtyps aber auch basierend auf einer Interaktion der Partei mit der Schließfachanlage, wie über die Eingabeschnittstelle der Schließfachanlage oder über die Eingabeschnittstelle des mobilen Endgeräts erfolgen, oder auch basierend auf einer Interkation der Partei mit dem Server, wie über die Eingabeschnittstelle der Schließfachanlage oder über die Eingabeschnittstelle des mobilen Endgeräts erfolgen. Wenn mehrere Schließfacheinheiten des ausgewählten Schließfachtyps für die Partei zur Verfügung stehen, so können diese Schließfacheinheiten beispielsweise über eine entsprechende Information auf der Anzeigevorrichtung der Schließfacheinheit oder auf der Anzeigevorrichtung des mobilen Endgeräts angezeigt werden.

In einer beispielhaften Ausführungsform des ersten Aspekts der Erfindung erfolgt das Ermitteln der Anzahl für die Partei zur Verfügung stehenden Schließfacheinheiten der Schließfachanlage für jeweils mindestens einen Schließfachtyp basierend auf mindesten einem vom: (i) einer Anzahl von dynamisch reservierten Schließfacheinheiten des Schließfachtyps; (ii) einer Anzahl von statisch reservierten Schließfacheinheiten des Schließfachtyps; (iii) einer Anzahl von nicht reservierten Schließfacheinheiten des Schließfachtyps; und (iv) einer Summe der Anzahl von dynamisch reservierten Schließfacheinheiten des Schließfachtyps, der Anzahl von statisch reservierten Schließfacheinheiten des Schließfachtyps und der Anzahl von nicht reservierten Schließfacheinheiten des Schließfachtyps.

Beispielweise kann die Anzahl der für die Partei zur Verfügung stehenden Schließfacheinheiten für einen jeweiligen Schließfachtyp mindestens einen Schließfachtyp eine der folgenden Anzahlen darstellen:
- Die Anzahl der dynamisch reservierten Schließfacheinheiten des Schließfachtyps der Schließfachanlage;
- Die Summe der Anzahl dynamisch reservierten Schließfacheinheiten des Schließfachtyps und der Anzahl der verfügbaren statisch reservierten Schließfacheinheiten des Schließfachtyps;
- Die Summe der Anzahl dynamisch reservierten Schließfacheinheiten des Schließfachtyps, der Anzahl der verfügbaren statisch reservierten Schließfacheinheiten des Schließfachtyps und der Anzahl von nicht reservierten Schließfacheinheiten des Schließfachtyps.

Somit wird die Anzahl der für die Partei zur Verfügung stehenden Schließfacheinheiten für einen jeweiligen Schließfachtyp (oder auch mehrere verschiedene Schließfachtypen) basierend auf der der Partei zugeordneten Reservierungsinformation für diese Schließfachanlage ermittelt, welche neben der fachtypbezogenen Reservierungsinformation optional auch die Information über mindestens eine statisch reservierte Schließfacheinheit der Schließfachanlage umfassen kann. Darüberhinaus kann die Anzahl der für die Partei zur Verfügung stehenden Schließfacheinheiten für einen jeweiligen Schließfachtyp auch noch weitere freie Schließfacheinheiten des Schließfachtyps berücksichtigen, so dass der Partei angezeigt werden kann, wie viele Schließfacheinheiten des jeweiligen Schließfachtyps der Partei derzeit zur Verfügung stehen. Beispielsweise kann diese Anzahl der der für die Partei zur Verfügung stehenden Schließfacheinheiten für jeweils verschiedene Schließfachtypen der Schließfachanlage ermittelt werden, so dass die Partei eine Gesamtübersicht angezeigt werden kann, die für jeden Schließfachtyp der verschiedenen Schließfachtypen die Anzahl der zur Verfügung stehenden Schließfacheinheiten angibt. Beispielsweise kann diese Anzahl der für die Partei zur Verfügung stehenden Schließfacheinheiten für einen jeweiligen Schließfachtyp (oder für mehrere verschiedene Schließfachtypen) als Teil oder als Ganzes der Information über mindestens eine Schließfacheinheit der Schließfachanlage, in welche eine der Partei zugeordnete Sendung deponiert werden soll, verstanden werden.

In einer beispielhaften Ausführungsform des ersten Aspekts der Erfindung umfasst das Anzeigen ferner das Anzeigen einer Information über verfügbare statisch reservierte Schließfacheinheiten des Schließfachtyps, welche diese statisch reservierten Schließfächer der Schließfachanlage bezeichnet.

In einer beispielhaften Ausführungsform des ersten Aspekts der Erfindung wird die Auswahl einer Schließfacheinheit der mindestens einen Schließfacheinheit der Schließfachanlage basierend auf einem Algorithmus erfolgt, welcher von einer mit der Schließfachanlage in Wirkverbindung stehenden Datenverarbeitungsanlage ausgeführt wird.

Die Datenverarbeitungsanlage kann beispielsweise die Rechenverarbeitungseinheit der entsprechenden Schließfachanlage darstellen, in welche die Sendung deponiert werden soll, oder die Rechenverarbeitungseinheit des Servers darstellen.

In einer beispielhaften Ausführungsform des ersten Aspekts der Erfindung wird bei der Auswahl einer Schließfacheinheit der mindestens einen Schließfacheinheit basierend auf den bereitgestellten Informationen bevorzugt eine solche Schließfacheinheit ausgewählt, welche eine für die Partei statisch reservierte Schließfacheinheit darstellt.

Somit können beispielsweise für eine Partei zunächst die statisch reservierten Schließfacheinheiten eines bestimmten Schließfachtyps einer Schließfachanlage zur Deponierung von Sendungen verwendet werden, und nachfolgend können Schließfacheinheiten des bestimmten Schließfachtyps der Schließfachanlage zum Deponieren verwendet werden, die als solche bestimmte Schließfacheinheiten nicht explizit von der Partei reserviert worden sind, sondern wo eine Reservierung einer Anzahl von Schließfacheinheiten für den bestimmten Schließfachtyp durch die fachtypbezogene Information vorgenommen wurde oder die sogar gar nicht für die Partei reserviert worden sind, allerdings dennoch frei verfügbar sind.

Wenn beispielsweise eine statisch reservierte Schließfacheinheit zur Deponierung der Sendung verwendet wurde, so kann eine entsprechende Information über die belegte statisch reservierte Schließfacheinheit in einer Datenbank in der Schließfachanlage und/oder dem Server gespeichert werden, so dass diese statisch reservierte Schließfacheinheit als "nicht verfügbar" gekennzeichnet ist und gegebenenfalls bei der Ermittlung der Anzahl der für die Partei zur Verfügung stehenden Schließfacheinheiten für diesen Schließfachtyp nicht mehr berücksichtigt wird.

In einer beispielhaften Ausführungsform des ersten Aspekts der Erfindung wird der Schließfachtyp, in welche der Sendung zugeordnet werden soll, basierend auf einem der folgenden ermittelt wird: (i) einem der Identifikationsnummer der Sendung zugeordneten Datenbankeintrag, welcher eine Information über die Größe der Sendung oder den Schließfachtyp umfasst; (ii) einer Eingabe einer Information über die Größe der Sendung oder über den Schließfachtyp an der Schließfachanlage; und (iii) eine Eingabe einer Information über die Größe der Sendung oder den Schließfachtyp auf einem mobilen elektronischen Gerät, welches zur Nutzung einer Partei eingerichtet ist.

Beispielsweise kann nach (ii) oder (iii) eine Auswahl eines Schließfachtyps der Schließfachanlage ermittelt werden, beispielsweise durch die Eingabeschnittstelle der Schließfachanlage oder durch eine Eingabeschnittstelle des mobilen Endgeräts. Somit kann beispielsweise die Partei, basierend auf der ihr optional angezeigten Anzahl der ihr zur Verfügung stehenden Schließfacheinheiten für einen jeweiligen Schließfachtyp (oder für mehrere verschiedene Schließfachtypen), entscheiden, welcher Schließfachtyp für die zu deponierende Sendung verwendet werden soll, und die Auswahl durch eine entsprechende Eingabe an der Eingabeschnittstelle der Schließfachanlage oder an einer entsprechenden Eingabeschnittstelle (nicht dargestellt) des mobilen Endgeräts eingeben. Ferner kann die Partei auch über die jeweilige Eingabeschnittstelle eine Information über die Größe der Sendung eingeben, wobei durch eine Rechenverarbeitungseinheit wie beispielsweise die der entsprechenden Schließfachanlage oder des Servers basierend auf der erfassten Information über die Größe der Sendung ein passender Schließfachtyp der entsprechenden Schließfachanlage ermittelt wird.

Beispielsweise kann basierend auf dem Identifikator, welcher der Sendung physisch zugeordnet ist und welcher erfasst wurde, ein Schließfachtyp bzw. die Größe der Sendung ermittelt werden, wobei aus der Größe der Sendung ein passender Schließfachtyp der Schließfachanlage ermittelt werden kann, wie zuvor erläutert wurde.

Beispielsweise kann dieses Ermitteln eines Schließfachtyps basierend auf einem Datenbankeintrag erfolgen, welcher der Identifikationsnummer der Sendung zugeordnet ist und eine Information über die Größe der Sendung oder den Schließfachtyp umfasst. Beispielsweise kann anhand der Information über die Größe der Sendung ein entsprechend passender Schließfachtyp der entsprechenden Schließfachanlage ermittelt werden. Dieser Datenbankeintrag kann beispielsweise Bestandteil einer in der Schließfachanlage oder auf dem Server gespeicherten Datenbank sein. So kann beispielsweise bei der Vornahme einer Reservierung, wie beispielsweise bei der dynamischen Reservierung eines Schließfachtyps durch Inkrementierung der Anzahl der von dynamisch reservierten Schließfacheinheiten des jeweiligen Schließfachtyps anhand der fachtypbezogenen Information ein Identifikator (wie beispielsweise eine Sendungs-ID) der entsprechenden Sendung erzeugt oder ermittelt werden, und diese mit dem entsprechenden Schließfachtyp verknüpft werden und als Datenbankeintrag gespeichert werden. Anschließend kann beispielweise diese Sendung mit dem entsprechenden Identifikator versehen werden.

Somit kann bei dieser beispielhaften Ausführungsform das Auswählen des Schließfachtyps durch die Partei während des Deponiervorgangs der Sendung an der entsprechenden Schließfachanlage entfallen.

Es kann jedoch der Partei beispielsweise die Möglichkeit gegeben werden, über die Eingabeschnittselle der Schließfachanlage oder die Eingabeschnittstelle des mobilen Endgeräts einen anderen Schließfachtyp auszuwählen, welcher von dem basierend auf dem Datenbankeintrag ermittelten Schließfachtyp abweicht.

In einer beispielhaften Ausführungsform des ersten Aspekts der Erfindung erfolgt das Anzeigen einer Anzahl für die Partei zur Verfügung stehenden Schließfacheinheiten der Schließfachanlage für jeweils mindestens einen Schließfachtyp basierend auf einer Größe der Sendung oder basierend auf einem der Sendung zugeordneten Schließfachtyps.

Beispielsweise wird nur die Anzahl für die Partei zur Verfügung stehenden Schließfacheinheiten der Schließfachanlage für den der Sendung zugeordneten Schließfachtyp angezeigt.

In einer beispielhaften Ausführungsform aller Aspekte der Erfindung erfolgt das Anpassen der der Partei zugeordneten Reservierungsinformation, wenn die Identifikationsnummer der Sendung mit der ausgewählten Schließfacheinheit verknüpft worden ist.

In einer beispielhaften Ausführungsform aller Aspekte der Erfindung umfasst das Anpassen, wenn die Sendung mit einer Schließfacheinheit verknüpft worden ist, welche der Anzahl von dynamisch reservierten Schließfacheinheiten eines Schließfachtyps zugeordnet ist, das Reduzieren der Anzahl von dynamisch reservierten Schließfacheinheiten dieses Schließfachtyps.

Somit steht der Partei nach Belegung einer Schließfacheinheit einer Schließfachanlage, welche über die Anzahl von der für die Partei dynamisch reservierten Schließfacheinheiten eines Schließfachtyps der Schließfachanlage belegt worden ist, nach diese Belegung eine um einen Zähler reduzierte Anzahl von dynamisch reservierten Schließfacheinheiten dieses Schließfachtyps an dieser Schließfachanlage zur Verfügung.

In einer beispielhaften Ausführungsform aller Aspekte der Erfindung sind zwei oder mehr Parteien vorgesehen, und jeder der zwei oder mehr Parteien eine Reservierungsinformation für jeweils mindestens eine Schließfachanlage der mindestens einen Schließfachanlage zugeordnet ist.

In einer beispielhaften Ausführungsform aller Aspekte der Erfindung sind den zwei oder mehr Parteien unterschiedliche Prioritäten zugewiesen.

In einer beispielhaften Ausführungsform aller Aspekte der Erfindung stellt mindestens eine Partei der mindestens einen Partei einen Logistiker dar.

In einer beispielhaften Ausführungsform aller Aspekte der Erfindung erfolgt das Detektieren der Entnahme einer in einer Schließfacheinheit einer Schließfachanlage deponierten Sendung, welche einer Partei zugeordnet ist, und das Anpassen der einer weiteren Partei zugeordneten Reservierungsinformation für diese Schließfachanlage.

In einer beispielhaften Ausführungsform aller Aspekte der Erfindung umfasst die einer Partei zugeordnete fachtypbezogene Information für eine Schließfachanlage keine Information über eine Zuordnung einer Sendung mit einer Schließfacheinheit einer Schließfachanlage der mindestens einen Schließfachanlage.

Somit wird bei der dynamischen Reservierung basierend auf der einer Partei zugeordneten fachtypbezogenen Information vermieden, dass eine spezifische Schließfacheinheit oder mehrere spezifische Schließfacheinheiten der Schließfachanlage reserviert werden, die anschließend blockiert wären und nur von dieser Partei genutzt werden können.

In einer beispielhaften Ausführungsform des ersten Aspekts der Erfindung erfolgt das Verknüpfen von Identifikatoren von zwei oder mehr Sendungen mit einer Schließfacheinheit einer Schließfachanlage der mindestens einen Schließfachanlage.

Somit kann eine Partei beispielsweise zwei oder mehr Sendungen in einer Schließfacheinheit einer Schließfachanlage deponieren.

In einer beispielhaften Ausführungsform des ersten Aspekts der Erfindung wird die Sendung zum Austauschen von Gegenständen, insbesondere von Schlüsseln, verwendet.

Gemäß dem zweiten Aspekt der Erfindung erfolgt ein Empfangen einer einer Partei zugeordneten elektronischen Anfrage zur dynamischen Reservierung einer bestimmten Anzahl von Schließfacheinheiten eines Schließfachtyps einer Schließfachanlage von mindestens einer Schließfachanlage; ein Prüfen, ob die angefragte Anzahl von Schließfacheinheiten des Schließfachtyps für die Partei verfügbar ist; und falls die angefragte Anzahl von Schließfacheinheiten des Schließfachtyps für die Partei verfügbar ist, eine Anpassung einer der Partei und der Schließfachanlage zugeordneten Reservierungsinformation, welche eine fachtypbezogene Information umfasst, wobei die fachtypbezogene Information für den Schließfachtyp der Schließfachanlage eine Information über die Anzahl von dynamisch reservierten Schließfacheinheiten des Schließfachtyps umfasst, zur dynamischen Reservierung der bestimmten Anzahl von Schließfacheinheiten des Schließfachtyps der Schließfachanlage.

Dieser zweite Aspekt kann zur Vornahme von Reservierungen für eine oder mehrere Schließfachanlagen eingerichtet ist. Das Verfahren kann beispielsweise, zumindest teilweise oder ganz, durch eine Rechenverarbeitungseinheit einer Schließfachanlage ausgeführt werden, und/oder zumindest teilweise oder ganz durch eine Rechenverarbeitungseinheit des Servers durchgeführt werden.

Es erfolgt bei der Rechenverarbeitungseinheit ein Empfangen einer einer Partei zugeordneten elektronischen Anfrage zur dynamischen Reservierung einer bestimmten Anzahl von Schließfacheinheiten eines Schließfachtyps einer Schließfachanlage von mindestens einer Schließfachanlage. Beispielsweise kann sich eine Partei solch eine elektronische Anfrage mit einem Endgerät, welches über eine Kommunikationsverbindung, die beispielsweise das Internet umfassen kann, mit der Rechenverarbeitungseinheit verbinden, so dass diese elektronische Anfrage bei der Rechenverarbeitungseinheit empfangen werden kann.

Wie bereits bezüglich der dynamischen Reservierung einer bestimmten Anzahl von Schließfacheinheiten eines Schließfachtyps einer Schließfachanlage für eine Partei hinsichtlich des ersten Aspekts der Erfindung ausgeführt wurde, soll mit der Anfrage zur dynamischen Reservierung einer bestimmten Anzahl von Schließfacheinheiten eines Schließfachtyps einer Schließfachanlage von mindestens einer Schließfachanlage eine Reservierung einer Anzahl von Schließfacheinheiten des bestimmten Schließfachtyps erfolgen, jedoch keine Reservierung von konkreten Schließfacheinheiten dieses Schließfachtyps der Schließfachanlage erfolgen.

Anschließend wird überprüft, ob die angefragte Anzahl von Schließfacheinheiten des Schließfachtyps an der Schließfachanlage für die Partei verfügbar ist. Beispielsweise kann diese Prüfung ein Prüfen umfassen, ob von der grundsätzlich zur Verfügung stehenden Anzahl von Schließfacheinheiten des bestimmten Schließfachtyps bei der Schließfachanlage abzüglich von bereits vorgenommenen Reservierungen (welche beispielsweise auch Reservierungen andere Parteien berücksichtigen kann) für diesen Schließfachtyp noch eine genügend große Anzahl von verbleibenden Schließfacheinheit des Schließfachtyps für die Partei zur Verfügung stehen.

Falls die Überprüfung in Schritt erfolgreich ist, so kann mit einer Anpassung einer der Partei und der Schließfachanlage zugeordneten Reservierungsinformation, welche eine fachtypbezogene Information umfasst, fortgefahren werden, wobei die fachtypbezogene Information für den Schließfachtyp der Schließfachanlage eine Information über die Anzahl von dynamisch reservierten Schließfacheinheiten des Schließfachtyps umfasst, zur dynamischen Reservierung der bestimmen Anzahl von Schließfacheinheiten des Schließfachtyps der Schließfachanlage. Umfasst die Anfrage beispielsweise eine dynamische Reservierung eine Anzahl von x Schließfacheinheiten eines Schließfachtyps, wobei x eine natürliche Zahl (aus 1,2,3,... ) ist, so wird beispielsweise die der Partei zugeordnete Information über die Anzahl von dynamisch reservierten Schließfacheinheiten des Schließfachtyps der Schließfachanlage um die Anzahl x erhöht. Wenn die der Partei vor Durchführung der Anpassung der Information zugeordnete Information über die Anzahl von dynamisch reservierten Schließfacheinheiten des Schließfachtyps der Schließfachanlage einer Anzahl von Null reservierten Schließfacheinheiten des Schließfachtyps der Schließfachanlage entspricht, so wird die der Partei und der Schließfachanlage zugeordnete Reservierungsinformation derart angepasst, dass die Information über die Anzahl von dynamisch reservierten Schließfacheinheiten des Schließfachtyps der Schließfachanlage einer Anzahl von x dynamisch reservierten Schließfacheinheiten des Schließfachtyps entspricht. Unter dem Begriff "Anpassen" kann somit beispielsweise auch das Erzeugen einer neuen Information über die Anzahl von dynamisch reservierten Schließfacheinheiten eines Schließfachtyps einer Schließfachanlage verstanden werden, wenn diese Information vorher noch nicht vorhanden war.

Wenn die der Partei vor der Anpassung der Information zugeordnete Information über die Anzahl von dynamisch reservierten Schließfacheinheiten des Schließfachtyps der Schließfachanlage einer Anzahl von n (wobei n eine natürliche Zahl darstellt) reservierten Schließfacheinheiten des Schließfachtyps der Schließfachanlage entspricht, so wird die der Partei und der Schließfachanlage zugeordnete Reservierungsinformation derart angepasst, dass die Information über die Anzahl von dynamisch reservierten Schließfacheinheiten des Schließfachtyps der Schließfachanlage einer Anzahl von n+x dynamisch reservierten Schließfacheinheiten des Schließfachtyps entspricht.

Ferner kann beispielsweise , wenn nicht die komplette Anzahl von x Schließfacheinheiten des Schließfachtyps der Schließfachanlage der Partei zur Verfügung steht, zumindest bereits eine dynamische Reservierung einer Anzahl von z Schließfacheinheiten des Schließfachtyps der Schließfachanlage für die Partei durchgeführt werden, mit z aus den natürlichen Zahlen und z kleiner als x, wenn der Partei zumindest eine Anzahl von z Schließfacheinheiten des Schließfachtyps der Schließfachanlage zur Verfügung steht, wobei diese dynamische Reservierung das Erhöhen der der Partei zugordneten Information über die Anzahl der dynamisch reservierten Schließfacheinheiten des ersten Schließfachtyps der Schließfachanlage um eine Anzahl von z Schließfacheinheiten umfasst.

Diese Reservierungsinformation kann beispielsweise als Reservierungsinformation für den ersten Aspekt der Erfindung verwendet werden.

In einer beispielhaften Ausführungsform des zweiten Aspekts der Erfindung stellt der der Anfrage zugeordnete Schließfachtyp ein erster Schließfachtyp der Schließfachanlage dar, und die Schließfachanlage umfasst mindestens einen weiteren Schließfachtyp, wobei das Verfahren ferner das Prüfen umfasst, ob eine dynamische Reservierung für einen weiteren Schließfachtyp der Schließfachanlage, der sich vom ersten Schließfachtyp unterscheidet, möglich ist, wenn die angefragte Anzahl von Schließfacheinheiten des Schließfachtyps für die Partei nicht verfügbar ist.

Beispielsweise kann dieser weitere Schließfachtyp ein solcher Schließfachtyp sein, welcher eine größere Größe als der erste Schließfachtyp aufweist, wie beispielsweise eine Nummer größer als der erste Schließfachtyp. Wird beispielsweise festgestellt, dass für die Partei zumindest die Anzahl von mindestens einer Schließfacheinheit des weiteren Schließfachtyps zur Verfügung steht, so ist zumindest eine Reservierung einer Anzahl von zumindest einer Schließfacheinheit des weiteren Schließfachtyps an der Schließfachanlage möglich.

Ferner kann beispielsweise diese beispielhafte Ausführungsform nur für eine Partei aus einer ersten Gruppe mindestens einer Partei zugelassen sein, während diese Ausführungsform nicht für eine Partei, welche nicht der ersten Gruppe zugeordnet ist, zugelassen ist. Somit kann eine Partei, welche nicht der ersten Gruppe zugeordnet ist, nicht auf einen weiteren Schließfachtyp ausweichen.

Darüberhinaus kann beispielsweise die dynamische Reservierung gemäß Verfahren zur Reservierung für einen weiteren Schließfachtyp nicht für jeden beliebigen weiteren Schließfachtyp zugelassen sein. Ist beispielsweise der erste Schließfachtyp ein Schließfachtyp mit einer bestimmten Mindestgröße, so kann beispielsweise kein weiterer Schließfachtyp mit einer größerer Größe als dieser bestimmten Mindestgröße verwendet werden, so dass beispielsweise der Überprüfung negativ ausfällt.

In einer beispielhaften Ausführungsform des zweiten Aspekts der Erfindung erfolgt, falls das Prüfen, ob eine dynamische Reservierung von mindestens einem weiteren Schließfachtyp der Schließfachanlage, der sich vom ersten Schließfachtyp unterscheidet, möglich ist, positiv ausfällt, ein Anpassen der der Partei und der Schließfachanlage zugeordneten fachtypbezogenen Information zur dynamischen Reservierung einer Anzahl von Schließfacheinheiten des weiteren Schließfachtyps der Schließfachanlage, wobei die fachtypbezogene Information für den weiteren Schließfachtyp der Schließfacheinheit eine Information über die Anzahl von dynamisch reservierten Schließfacheinheiten des weiteren Schließfachtyps umfasst.

Umfasst die Anfrage beispielsweise eine dynamische Reservierung eine Anzahl von x Schließfacheinheiten eines Schließfachtyps, wobei x eine natürliche Zahl (aus 1,2,3,...) ist, und konnte beispielsweise keine der x angefragten Schließfacheinheiten dynamisch reserviert werden, und steht die Anzahl von y Schließfacheinheiten des weiteren Schließfachtyps der Schließfachanlage zur Verfügung, so kann beispielsweise für die Partei die Anzahl von x Schließfacheinheiten des weiteren Typs der Schließfachanalage dynamisch reserviert werden, wenn x kleiner oder gleich y ist, indem die der Partei zugeordnete Information über die Anzahl der dynamisch reservierten Schließfacheinheiten des weiteren Schließfachtyps der Schließfachanlage um eine Anzahl von x Schließfacheinheiten erhöht wird. Oder es kann beispielsweise für die Partei die Anzahl von y Schließfacheinheiten des weiteren Typs der Schließfachanalage dynamisch reserviert werden, wenn x größer als y ist, indem die der Partei zugeordnete Information über die Anzahl der dynamisch reservierten Schließfacheinheiten des weiteren Schließfachtyps der Schließfachanlage um eine Anzahl von y Schließfacheinheiten erhöht wird.

Konnte vorab bereits eine dynamische Reservierung einer Anzahl von z Schließfacheinheiten des ersten Schließfachtyps der Schließfachanlage für die Partei durchgeführt werden, mit z aus den natürlichen Zahlen und z kleiner als x, wobei diese dynamische Reservierung das Erhöhen der der Partei zugordneten Information über die Anzahl der dynamisch reservierten Schließfacheinheiten des ersten Schließfachtyps der Schließfachanlage um eine Anzahl von z Schließfacheinheiten umfasst, so reduziert sich die Anzahl x bei dem zuvor genannten Beispiel um die bereits reservierte Anzahl von z Schließfacheinheiten.

In einer beispielhaften Ausführungsform jeder der Aspekte der Erfindung sind zwei oder mehr Parteien vorgesehen sind, und jeder der zwei oder mehr Parteien ist eine Reservierungsinformation für jeweils mindestens eine Schließfachanlage der mindestens einen Schließfachanlage zugeordnet.

In einer beispielhaften Ausführungsform jeder der Aspekte der Erfindung sind den zwei oder mehr Parteien unterschiedliche Prioritäten zugewiesen sind.

In einer beispielhaften Ausführungsform des zweiten Aspekts der Erfindung hängt das Prüfen, ob die angefragte Anzahl von Schließfacheinheiten des Schließfachtyps für die Partei verfügbar ist, von der der Partei zugeordneten Priorität ab.

Ferner kann beispielsweise das Durchführen der Überprüfung für eine Partei, ob die angefragte Anzahl von Schließfacheinheiten des Schließfachtyps an der Schließfachanlage für die Partei verfügbar ist, zu einem bestimmten Zeitpunkt durchgeführt werden, welche von der jeweiligen Partei abhängt. Sind beispielsweise mehrere Parteien vorhanden, die eine Reservierung vornehmen können, so können beispielsweise den Parteien unterschiedliche Prioritäten zugewiesen sein, wobei beispielsweise bis zu einem bestimmten Zeitpunkt, der z.B. innerhalb eines Zeitrahmens (wie beispielsweise einem Tag oder einer Woche) liegen kann, nur eine Partei mit einer bestimmten Priorität eine dynamische Reservierung vornehmen kann, so dass die Überprüfung bis zu diesem Zeitpunkt nur für eine oder mehrere Parteien, die diese bestimmte Priorität aufweisen, durchgeführt werden kann, so dass diese Überprüfung einer anderer Partei, der eine geringere Priorität als diese bestimmte Priorität zugeordnet ist, erst nach diesem bestimmten Zeitpunkt durchgeführt werden kann. Somit kann ermöglicht werden, dass eine Partei der bestimmten Priorität eine dynamische Reservierung vorrangig durchführen kann, und Parteien, die eine geringere Priorität aufweisen, erst nachrangig dynamisch reservieren dürfen. Es können auch mehrere nacheinander gestaffelte Zeitpunkte, die z.B. innerhalb eines Zeitrahmens (wie beispielsweise einem Tag oder einer Woche liegen können, wobei jeder der Zeitpunkte einer entsprechenden unterschiedlichen Priorität aus einer Mehrzahl von Prioritäten zugeordnet ist.

Ferner können beispielsweise bis zu einem bestimmten Zeitpunkt die eingehenden Anfragen von einer Partei oder von mehreren Parteien gesammelt werden, wobei anschließend das Durchführen der Überprüfung für jeweils eine Partei, ob die angefragte Anzahl von Schließfacheinheiten des Schließfachtyps an der Schließfachanlage für die Partei verfügbar ist, und die nachfolgenden Schritte bei erfolgreicher oder negativer Prüfung, in der Reihenfolge der Prioritäten der Parteien durchgeführt werden, wobei mit der Partei begonnen wird, welche die höchste Priorität aufweist, und anschließend für die Parteien in Richtung absteigender Priorität jeweils überprüft wird, ob die angefragte Anzahl von Schließfacheinheiten des Schließfachtyps an der Schließfachanlage für die Partei verfügbar ist.

In einer beispielhaften Ausführungsform des zweiten Aspekts der Erfindung erfolgt, falls das Prüfen, ob die angefragte Anzahl von Schließfacheinheiten des Schließfachtyps für die Partei verfügbar ist, negativ ausfällt, das Speichern einer der Partei zugeordneten Information über die Anzahl von Schließfacheinheiten des Schließfachtyps der Schließfachanlage der Anfrage, für welche keine dynamische Reservierung vorgenommen wurde.

Diese beispielhafte Ausführungsform kann beispielsweise dann verwendet werden, wenn nicht die vollständige Anzahl x Fächer der Anfrage der Partei dynamisch reserviert werden konnten, wobei diese dynamische Reservierung beispielsweise auch die gegebenenfalls reservierte Anzahl von Schließfacheinheiten des weiteren Schließfachtyps umfassen kann. Wurden beispielsweise von der angefragten Anzahl von x Fächern die Anzahl von z Schließfacheinheiten des ersten Schließfachtyps dynamisch reserviert und wurde beispielsweise die Anzahl von y Schließfacheinheiten des weiteren Schließfachtyps für die Partei dynamisch reserviert, so kann die Anzahl von Schließfacheinheiten des Schließfachtyps der Anfrage, für welche keine dynamische Reservierung vorgenommen wurde, der Anzahl x-z-y entsprechen. Somit kann eine Vormerkung dieser verbleibenden Anzahl von nicht dynamisch reservierten Fächer des ersten Schließfachtyps der bestimmten Schließfachanlage für die Partei vorgenommen werden, die später berücksichtigt werden kann, wenn beispielsweise Schließfacheinheiten dieses ersten Schließfachtyps wieder zur Verfügung stehen sollten.

In einer beispielhaften Ausführungsform des zweiten Aspekts der Erfindung erfolgt das Detektieren der Entnahme einer in einer Schließfacheinheit einer Schließfachanlage deponierten Sendung, welche einer ersten Partei zugeordnet ist.

Diese Detektion kann basierend auf einem geeigneten Detektionsmittel der entsprechenden Schließfachanlage erfolgen, wobei die eigentliche Detektion in der Rechenverarbeitungseinheit der Schließfachanlage oder in der Rechenverarbeitungseinheit des Servers erfolgen kann.

In einer beispielhaften Ausführungsform des zweiten Aspekts der Erfindung erfolgt, wenn für eine weitere Partei eine Information über eine Anzahl von Schließfacheinheiten eines Schließfachtyps einer Schließfachanlage , für welche keine dynamische Reservierung vorgenommen wurde, gespeichert ist, und wenn der Schließfachtyp dieser Information dem Schließfachtyp der Schließfachanlage, aus welchem die Sendung entnommen wurde entspricht und wenn die Schließfachanlage dieser Information der Schließfachanlage, aus welchem die Sendung entnommen wurde, entspricht, ein Erhöhen der Anzahl von dynamisch reservierten Schließfacheinheiten dieses Schließfachtyps der Schließfachanlage der weiteren Partei.

Somit kann geprüft werden, ob für eine weitere Partei, welche sich von der ersten Partei unterscheidet, eine Information über eine Anzahl von Schließfacheinheiten eines Schließfachtyps einer Schließfachanlage t, für welche keine dynamische Reservierung vorgenommen wurde, gespeichert ist, wobei der Schließfachtyp dieser Information dem Schließfachtyp der Schließfachanlage entsprechen muss, aus welchem die Sendung entnommen wurde, und die Schließfachanlage dieser Information der Schließfachanlage, aus welchem die Sendung entnommen wurde, entsprechen muss. Diese Information über eine Anzahl von Schließfacheinheiten eines Schließfachtyps einer Schließfachanlage, für welche keine dynamische Reservierung vorgenommen wurde, kann beispielsweise vorab für diese weitere Partei gespeichert worden sein.

Ist diese Überprüfung erfolgreich, so kann ein Anpassen der Reservierungsinformation für die weitere Partei dahingehend erfolgen, dass die der weiteren Partei zugeordnete Information über die Anzahl von dynamisch reservierten Schließfacheinheiten dieses Schließfachtyps der Schließfachanlage inkrementiert wird.

In einer beispielhaften Ausführungsform des zweiten Aspekts der Erfindung erfolgt ein Entfernen einer Anzahl von dynamisch reservierten Schließfacheinheiten eines Schließfachtyps von der fachtypbezogenen Information einer Schließfachanlage einer Partei, wenn die Anzahl von dynamisch reservierten Schließfacheinheiten eines Schließfachtyps der Schließfachanlage von der Partei bis zu einem bestimmten Zeitpunkt nicht genutzt worden ist.

Somit kann die vormals dynamisch reservierte Anzahl von dynamisch reservierten Schließfacheinheiten eines Schließfachtyps einer Schließfachanlage wieder für neue Reservierungen freigegeben werden. Der Zeitpunkt kann beispielsweise von der Priorität der Partei abhängen, welche die dynamische Reservierung vorgenommen hat.

Die oben beschriebenen Ausführungsbeispiele und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1:: Eine schematische Darstellung eines Systems, in dem beispielhafte Ausführungsformen der Erfindung eingesetzt werden;
- Fig. 2:: ein Flussdiagramm einer ersten beispielhaften Ausführungsform eines Verfahrens gemäß einem ersten Aspekt der Erfindung;
- Fig. 3a:: ein Flussdiagramm einer zweiten beispielhaften Ausführungsform eines Verfahrens gemäß einem ersten Aspekt der Erfindung;
- Fig. 3b:: ein Flussdiagramm einer dritten beispielhaften Ausführungsform eines Verfahrens gemäß einem ersten Aspekt der Erfindung;
- Fig. 4:: ein Flussdiagramm einer ersten beispielhaften Ausführungsform eines Verfahrens gemäß einem zweiten Aspekt der Erfindung;
- Fig. 5:: ein Flussdiagramm einer zweiten beispielhaften Ausführungsform eines Verfahrens gemäß einem zweiten Aspekt der Erfindung;
- Fig. 6a:: ein Flussdiagramm einer dritten beispielhaften Ausführungsform eines Verfahrens gemäß einem zweiten Aspekt der Erfindung; und
- Fig. 6b:: ein Flussdiagramm einer vierten beispielhaften Ausführungsform eines Verfahrens gemäß einem zweiten Aspekt der Erfindung;

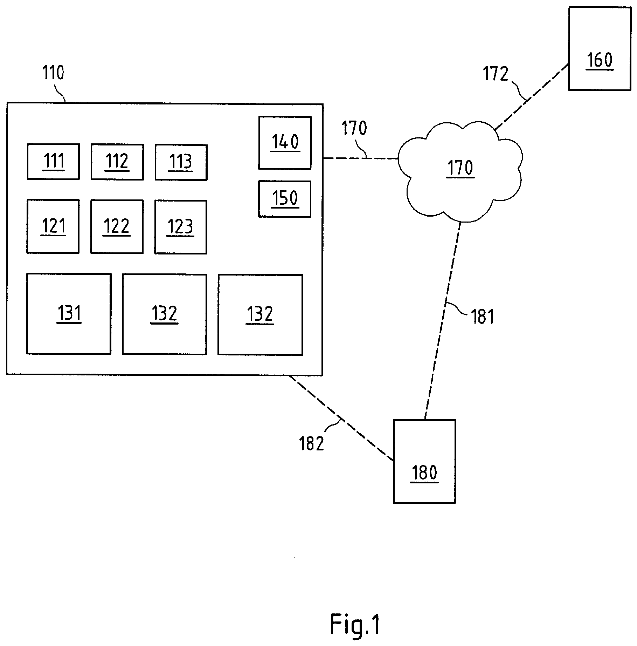

Figur 1 zeigt eine schematische Darstellung eines Systems 100, in welchem beispielhafte Ausführungsformen der Erfindung eingesetzt werden können. Das System umfasst mindestens eine elektronische Schließfachanlage 110. Obgleich in Figur 1 nur eine einzige Schließfachanlage 110 dargestellt ist, soll Figur 1 nicht einschränkend verstanden werden, d.h. es können auch zwei oder mehr elektronische Schließfachanlagen 110 im System 100 vorhanden sein.

Jede Schließfachanlage 110 der mindestens einen Schließfachanlage umfasst eine Mehrzahl von Schließfacheinheiten 111-113, 121-123, 131-133. Jeder der Schließfacheinheit 111-113, 121-123, 131-133 der Mehrzahl von Schließfacheinheiten 111-113, 121-123, 131-133 ist beispielsweise ein Verschlußmittel zugeordnet, welches dazu eingerichtet ist, die jeweilige Schließfacheinheit 111-113, 121-123, 131-133 zu öffnen oder zu verschließen. Das Verschlußmittel kann über ein elektrisches Signal gesteuert werden, wobei beispielsweise eine Schließfachanlage 110 eine Steuerungseinheit zur Ansteuerung der Verschlußmittel der Schließfacheinheiten 111-113, 121-123, 131-133 aufweist.

Die Schließfachanlage 110 kann verschiedene Typen von Schließfacheinheiten umfassen, wobei sich die verschiedenen Schließfachtypen beispielsweise in der Form und/oder in der Größe unterschieden. So können die in Fig. 1 beispielhaft dargestellten Schließfacheinheiten 111-113 einem ersten Schließfachtyp zugeordnet sein, die in Fig. 1 beispielhaft dargestellten Schließfacheinheiten 121-123 einem zweiten Schließfachtyp zugeordnet sein und die in Fig. 1 beispielhaft dargestellten Schließfacheinheiten 131-133 einem dritten Schließfachtyp zugeordnet sein. Der erste Schließfachtyp kann beispielsweise eine kleine Größe aufweisen, der zweite Schließfachtyp kann beispielsweise eine mittlere Größe aufweisen und der dritte Schließfachtyp kann beispielsweise eine große Größe aufweisen. Es versteht sich, dass die Erfindung nicht auf genau drei verschiedene Schließfachtypen beschränkt ist, sondern jegliche Anzahl von mindestens zwei verschiedenen Schließfachtypen umfassen kann.

Die Schließfachanlage 110 kann beispielsweise über ein Datennetz 170 mit einem Server 160 verbunden sein, wobei der Server 160 dazu eingerichtet sein kann, eine Schließfachanlage 110 der mindestens einen Schließfachanlage 110 zu steuern. Dieses Datennetz kann beispielsweise das Internet umfassen und/oder andere Datennetze umfassen.

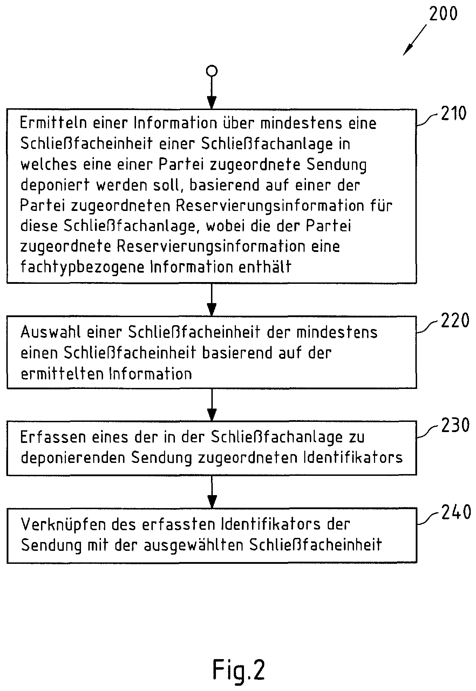

Das in Fig. 1 dargestellte System und das in Fig. 2 dargestellte Verfahren, welches eine erste beispielhafte Ausführungsform eines Verfahrens gemäß einem ersten Aspekt der Erfindung darstellt, können zum Betreiben von mindestens einer elektronischen Schließfachanlage 110 verwendet werden.

Möchte eine Partei eine Sendung in eine Schließfacheinheit einer Schließfachanlage 110 deponieren, so geschieht dies basierend auf einer der Partei zugeordneten Reservierungsinformation für diese Schließfachanlage 110, welche beispielsweise in dem Server 160 und/oder in einem Speicher der entsprechenden Schließfachanlage 110 gespeichert sein kann. Diese der Partei und der Schließfachanlage 110 zugeordnete Reservierungsinformation umfasst eine fachtypbezogene Information, die für jeden Schließfachtyp von mindestens einem Schließfachtyp der entsprechenden Schließfachanlage eine Information über die Anzahl von dynamisch reservierten Schließfacheinheiten des Schließfachtyps enthält. Somit kann eine Partei vorab für eine bestimmte Schließfachanlage 110 eine Anzahl von Schließfacheinheiten eines Schließfachtyps reservieren. Beispielsweise kann eine Partei elektronisch über eine Schnittstelle auf den Server 160 zugreifen und dort eine entsprechende fachtypbezogene Information für einen Schließfachtyp oder mehrere Schließfachtypen einer Schließfachanlage speichern.

Die Anzahl von Schließfacheinheiten kann eine Anzahl von genau 1 bedeuten oder auch eine Anzahl von zwei oder mehr Schließfacheinheiten sein. Diese der Partei und der Schließfachanlage 110 zugeordnete fachtypbezogene Information, welche für jeden Schließfachtyp von mindestens einem Schließfachtyp der entsprechenden Schließfachanlage eine Information über die Anzahl von dynamisch reservierten Schließfacheinheiten des Schließfachtyps umfasst, beinhaltet keine Zuordnung zu einer bestimmten oder mehreren bestimmten Schließfacheinheiten des Schließfachtyps; im Ergebnis wird lediglich eine Anzahl von Schließfacheinheiten des jeweiligen Schließfachtyps an der jeweiligen Schließfachanlage für die Partei reserviert, ohne dass hierbei konkrete Zuordnung zu Schließfacheinheiten der Schließfachanlage vorgenommen wird.

Wenn eine Partei eine Sendung in eine Schließfacheinheit einer Schließfachanlage 110 deponieren möchte, so wird eine Information über mindestens eine Schließfacheinheit einer Schließfachanlage der mindestens einen Schließfachanlage, in welche eine einer Partei zugeordnete Sendung deponiert werden soll, durch eine Datenverarbeitungseinheit bereitgestellt, basierend auf einer der Partei zugeordneten Reservierungsinformation für diese Schließfachanlage, wie beispielsweise durch Bezugszeichen 210 in Fig. 2 dargestellt. Diese Datenverarbeitungseinheit kann beispielsweise in der Schließfachanlage 110 angeordnet sein oder auch im Server 160 angeordnet sein. Diese Information über mindestens eine Schließfacheinheit einer Schließfachanlage der mindestens einen Schließfachanlage, in welche eine einer Partei zugeordnete Sendung deponiert werden soll, kann beispielsweise nur die zuvor genannte fachtypbezogene Information umfassen oder aber alternativ auch weitere Informationen umfassen.

Basierend auf dieser ermittelten Information über mindestens eine Schließfacheinheit einer Schließfachanlage der mindestens einen Schließfachanlage, in welche eine einer Partei zugeordnete Sendung deponiert werden soll, wird eine Schließfacheinheit der mindestens einen Schließfacheinheit der Schließfachanlage ausgewählt, in welchedie Sendung deponiert werden soll, wie beispielsweise durch Bezugszeichen 220 in Fig. 2 dargestellt. Dieser Vorgang des Auswählens erfolgt zumindest durch Unterstützung der Datenverarbeitungseinheit der Schließfachanlage 110 und /oderder Datenverarbeitungseinheit des Servers 160. Bei der Auswahl einer Schließfacheinheit der mindestens einen Schließfacheinheit kann somit die Reservierungsinformation der Partei, welche die fachtypbezogene Information umfasst, für diese Schließfachanlage berücksichtigt werden. Weil die fachtypbezogene Information keine Zuordnung zu einer bestimmten Schließfacheinheit oder mehreren bestimmten Schließfacheinheit der Schließfachanlage umfasst, muss bei der Reservierung anhand der fachtypbezogenen Information keine bestimmte Schließfacheinheit der Schließfachanlage vorab reserviert werden, sondern es wird beispielsweise lediglich die Anzahl der Schließfacheinheiten für den jeweiligen reservierten Schließfachtyp der Schließfachanlage vorab reserviert, so dass beispielsweise der Server 160 und/oder die entsprechende Schließfachanlage 110 sicherstellt, dass zumindest die reservierte Anzahl der Schließfacheinheiten für den jeweiligen reservierten Schließfachtyp der Schließfachanlage für die Partei freigehalten wird, wobei dieses Freihalten beispielsweise von weiteren Faktoren wie der Priorität von Parteien und/oder einem bestimmten Zeitpunkt, bis zu dem die Reservierung gelten soll, abhängen kann. Dies kann den Vorteil aufzeigen, dass vorab keine bestimmte Schließfacheinheit für eine Sendung reserviert wird und somit durch diese Reservierung blockiert ist, so dass eine Zuordnung einer Sendung beispielsweise erst beim Deponieren der Sendung in der entsprechenden Schließfachanlage 110 erfolgt. Somit kann beispielsweise vermieden werden, dass sich eine fest für eine Sendung reservierte Schließfacheinheit beim Versuch des Deponierens in der Schließfachanlage als defekt erweist und ein Deponieren der Sendung in der Schließfachanlage daher nicht mehr möglich ist, weil lediglich die Anzahl der Schließfacheinheiten von dem jeweiligen Schließfachtyp der Schließfachanlage 110 reserviert wird.

Somit erfolgt das Auswählen einer Schließfacheinheit der mindestens einen Schließfacheinheit der Schließfachanlage 110 in Schritt 220 zeitlich nachfolgend zu der Vornahme einer Reservierung basierend auf der fachtypbezogenen Information. Beispielweise erfolgt dieses Auswählen erst dann, wenn die Partei die Sendung in der entsprechenden Schließfachanlage 110 vor Ort deponieren möchte, wie beispielsweise nach einer Anmeldung bzw. Identifikation der Partei an der entsprechenden Schließfachanlage 110 oder an dem Server 160 zum nachfolgenden Deponieren der Sendung in der Schließfachanlage.

Ferner erfolgt ein Erfassen eines in der Schließfachanlage zu deponierenden Sendung physisch zugeordneten Identifikators, wie beispielsweise einer auf der Sendung aufgebrachten Kennung der Sendung, welche beispielsweise einen Barcode oder ein alphanumerischer Aufdruck oder ein anderweitig geeigneter Identifikator sein kann. Diese Kennung kann beispielsweise eine Sendungs-ID darstellen, mit welcher sich die Sendung nachverfolgen lässt. Beispielweise kann die Schließfachanlage 110 Mittel zum Erfassen dieses der Sendung physisch zugeordneten Identifkators umfassen, wie beispielweise einen Scanner oder ein anderes geeignetes Mittel, oder aber es kann ein mobiles Endgerät 180 vorgesehen sein, welches diese Mittel zum Erfassen dieses der Sendung physisch zugeordneten Identifkators umfasst, wobei das mobile Endgerät den erfassten Identifikator beispielsweise über eine vorzugsweise drahtlos ausgebildete Kommunikationsverbindung 182 an die Schließfachanlage 110 übermitteln kann und/oder den erfassten Identifkator beispielweise über eine vorzugsweise drahtlose ausgebildete Kommunikationsverbindung 181 an den Server 160 übermitteln kann.

Nach der Auswahl einer Schließfacheinheit in Schritt 210 an der Schließfachanlage 110 wird beispielsweise diese Schließfacheinheit automatisch durch die Schließfachanlage 110 geöffnet oder es kann beispielsweise auf den Anzeigemitteln 140 der Schließfachanlage eine Information ausgegeben werden, welche Schließfacheinheit der Schließfachanlage 110 zur Deponierung der Sendung verwenden werden soll, so dass die Partei die Sendung in die geöffnete Schließfacheinheit oder in die angezeigte Schließfacheinheit deponieren kann.

Ferner erfolgt in Schritt 240 ein Verknüpfen des erfassten Identifikators der Sendung mit der ausgewählten Schließfacheinheit. Somit erfolgt eine Zuordnung der Sendung mit der ausgewählten Schließfacheinheit der Schließfachanlage 110 erst beim Deponiervorgang der Sendung an der Schließfacheinheit.

Darüber hinaus kann die einer Partei und einer Schließfachanlage zugordnete Reservierungsinformation auch eine Information über mindestens eine statisch reservierte Schließfacheinheit der entsprechenden Schließfachanlage umfassen. Somit kann beispielsweise eine Partei zusätzlich zur fachtypbezogenen Reservierung, welche keine Reservierung einer bestimmten Schließfacheinheit einer Schließfachanlage umfasst, auch mindestens eine Schließfacheinheit der Schließfachanlage fest und somit statisch reservieren. Bei dieser statischen Reservierung mindestens einer Schließfacheinheit einer Schließfachanlage erfolgt jedoch während des Reservierungsvorgangs keine Zuordnung des statisch reservierten Schließfaches zu einer Sendung, sondern es wird lediglich die mindestens eine statisch reservierte Schließfacheinheit der Schließfachanlage für die entsprechende Partei reserviert. Die Menge von statisch reservierten Schließfacheinheiten einer Schließfachanlage reduziert die Anzahl der potentiell zur Verfügung stehenden dynamisch reservierbaren Schließfacheinheiten eines Schließfachtyps. Eine statische Reservierung einer Schließfacheinheit kann beispielsweise im Gegensatz zur dynamischen Reservierung einer Anzahl von Schließfacheinheiten eines Schließfachtyps bestehen bleiben, so dass der entsprechenden fortwährend die statisch reservierten Schließfacheinheiten einer Schließfachanlage 110 zur Verfügung stehen.

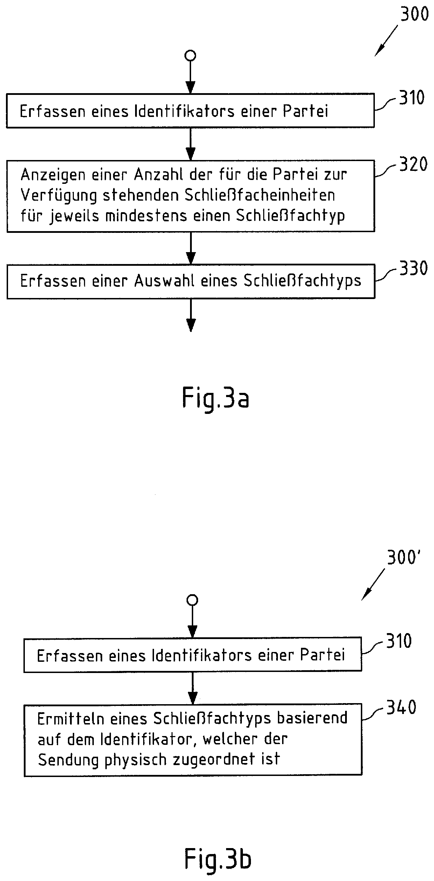

Fig. 3a zeigt ein exemplarisches Flußdiagramm eines Verfahrens 300 gemäß einer beispielhaften Ausführungsform des ersten Aspekts der Erfindung. Dieses Verfahren 300 kann beispielsweise für das in Fig. 2 dargestellte beispielhafte Verfahren verwendet werden und dieses beispielsweise ergänzen.

In Schritt 310 erfolgt das Erfassen einer Identifikation einer Partei, welche eine Sendung in eine Schließfachanlage 110 der mindestens einen Schließfachanlage 110 deponieren möchte.

Beispielsweise kann eine Partei, welche eine Sendung in einer bestimmten Schließfachanlage deponieren möchte, sich über eine Interaktion mit der Schließfachanlage an der Schließfachanlage 110, wie beispielweise über eine Eingabeschnittstelle 150, welche z.B. ein Tastenfeld und/oder ein Touchpad und/oder ein Kartenlesegerät und/oder ein Transponderlesergerät, welches zum Auslesen von RFID-Transpondern oder NFIC-Transpondern oder anderen Transpondern eingerichtet ist, und/oder ein sonstige Eingabemittel umfassen kann, an der Schließfachanlage identifizieren oder anmelden, wobei beim Anmeldevorgang beispielsweise ein Identifikator der Partei durch die Eingabeschnittstelle 150 erfasst wird. Alternativ kann sich die Partei über ein optional vorgesehenes mobiles Endgerät 180, welches sich beispielsweise über eine vorzugsweise drahtlose Kommunikationsverbindung 182 mit der entsprechenden Schließfachanlage 110 verbinden kann, an der Schließfachanlage durch Übertragung des Identifikators an die Schließfachanlage 110 anmelden.

Ferner kann das optionale mobile Endgerät 180 beispielsweise auch dazu eingerichtet sein, sich über eine vorzugsweise drahtlose Kommunikationsverbindung 181 mit dem Server 160 zu verbinden, wobei der Identifikator der Partei über diese Kommunikationsverbindung zu dem Server 160 übertragen werden kann und beispielsweise eine Information über die ausgewählte Schließfacheinheit an den Server 160 übertragen werden kann, wobei die Anmeldung bzw. Identifikation der Partei entweder in der Datenverarbeitungseinheit des Servers 160 erfolgen kann, oder aber der Server von dem mobilen Endgerät 180 empfangene Daten (wie beispielsweise den Identifikator) zumindest teilweise an die entsprechende Schließfachanlage 110 über die Kommunikationsverbindung 171 weiterleitet, so dass eine Anmeldung der Partei an der Schließfachanlage 110 erfolgen kann.

Somit kann beispielweise durch diese Identifikation der Partei durch die Schließfachanlage 110 und/oder durch den Server 160 die dieser Partei zugeordnete Reservierungsinformation aus einer Datenbank, welche entweder in der Schließfachanlage 110 und/oder auf dem Server 160 gespeichert ist, durch die Rechenverarbeitungseinheit der Schließfachanlage 110 und/oder des Servers 160 zumindest teilweise ausgelesen werden und von dieser Rechenverarbeitungseinheit zur Ermittlung einer Information über mindestens eine Schließfacheinheit der Schließfachanlage, in welche eine der Partei zugeordnete Sendung deponiert werden soll, in Schritt 210 verwendet werden.

In Schritt 320 des Verfahrens 300 wird eine Anzahl der für die Partei zur Verfügung stehenden Schließfacheinheiten für jeweils mindestens einen Schließfachtyp angezeigt. Diese Anzeige kann beispielsweise auf der Anzeigevorrichtung 140 der Schließfachanlage und/oder auf einer Anzeigevorrichtung des mobilen Endgeräts 180 der Partei erfolgen. Der Partei kann somit für einen Schließfachtyp der Schließfachanlage 110 oder auch für mehrere Schließfachtypen der Schließfachanlage 110 angezeigt werden, wieviele Schließfacheinheiten des jeweiligen Schließfachtyps der Partei zum Deponieren von Sendungen zur Verfügung stehen.

Die Ermittlung der Anzahl der für die Partei zur Verfügung stehenden Schließfacheinheiten für jeweils mindestens einen Schließfachtyp der Schließfachanlage 110 kann beispielsweise durch den Server 160 oder durch die Rechenverarbeitungseinheit der entsprechenden Schließfachanlage 110 durchgeführt werden. Beispielweise kann die Anzahl der für die Partei zur Verfügung stehenden Schließfacheinheiten für einen jeweiligen Schließfachtyp mindestens einen Schließfachtyp eine der folgenden Anzahlen darstellen:
- Die Anzahl der dynamisch reservierten Schließfacheinheiten des Schließfachtyps der Schließfachanlage;
- Die Summe der Anzahl der dynamisch reservierten Schließfacheinheiten des Schließfachtyps und der Anzahl der verfügbaren statisch reservierten Schließfacheinheiten des Schließfachtyps;
- Die Summe der Anzahl der dynamisch reservierten Schließfacheinheiten des Schließfachtyps, der Anzahl der verfügbaren statisch reservierten Schließfacheinheiten des Schließfachtyps und der Anzahl von nicht reservierten Schließfacheinheiten des Schließfachtyps.

Somit wird die Anzahl der für die Partei zur Verfügung stehenden Schließfacheinheiten für einen jeweiligen Schließfachtyp (oder auch mehrere verschiedene Schließfachtypen) basierend auf der der Partei zugeordneten Reservierungsinformation für diese Schließfachanlage ermittelt, welche neben der fachtypbezogenen Reservierungsinformation optional auch die Information über mindestens eine statisch reservierte Schließfacheinheit der Schließfachanlage 110 umfassen kann. Darüberhinaus kann die Anzahl der für die Partei zur Verfügung stehenden Schließfacheinheiten für einen jeweiligen Schließfachtyp auch noch weitere freie Schließfacheinheiten des Schließfachtyps berücksichtigen, so dass der Partei angezeigt werden kann, wie viele Schließfacheinheiten des jeweiligen Schließfachtyps der Partei derzeit zur Verfügung stehen. Beispielsweise kann diese Anzahl der für die Partei zur Verfügung stehenden Schließfacheinheiten für jeweils verschiedene Schließfachtypen der Schließfachanlage 110 angezeigt werden, so dass der Partei eine Gesamtübersicht angezeigt werden kann, die für jeden Schließfachtyp der verschiedenen Schließfachtypen die Anzahl der zur Verfügung stehenden Schließfacheinheiten angibt. Beispielsweise kann diese Anzahl der für die Partei zur Verfügung stehenden Schließfacheinheiten für einen jeweiligen Schließfachtyp (oder für mehrere verschiedene Schließfachtypen) als Teil oder als Ganzes der Information über mindestens eine Schließfacheinheit der Schließfachanlage, in welche eine der Partei zugeordnete Sendung deponiert werden soll, welche in Schritt 210 ermittelt wird, verstanden werden.

In Schritt 330 wird eine Auswahl eines Schließfachtyps der Schließfachanlage erfasst, beispielsweise durch die Eingabeschnittstelle 150 der Schließfachanlage 110 oder durch das mobile Endgerät 180. Somit kann beispielsweise die Partei, basierend auf der ihr angezeigten Anzahl der ihr zur Verfügung stehenden Schließfacheinheiten für einen jeweiligen Schließfachtyp (oder für mehrere verschiedene Schließfachtypen), entscheiden, welcher Schließfachtyp für die zu deponierende Sendung verwendet werden soll, und die Auswahl durch eine entsprechende Eingabe an der Eingabeschnittstelle 150 der Schließfachanlage 110 oder an einer entsprechenden Eingabeschnittstelle (nicht dargestellt) des mobilen Endgeräts 180 eingeben. Das Erfassen einer Auswahl eines Schließfachtyps in Schritt 330 kann daher einen Teil des in Fig. 2 dargestellten Schritts 220 zum Auswählen einer Schließfacheinheit darstellen.

Nachdem der Schließfachtyp ermittelt worden ist, kann die endgültige Auswahl einer Schließfacheinheit des ausgewählten Schließfachtyps durchgeführt werden, in welche die Sendung zu deponieren ist. Dies kann beispielsweise durch die Rechenverarbeitungseinheit der entsprechenden Schließfachanlage 110 oder durch den Server 160 durchgeführt werden. Alternativ kann die Auswahl einer Schließfacheinheit des ausgewählten Schließfachtyps aber auch basierend auf einer Interaktion der Partei mit der Schließfachanlage, wie über die Eingabeschnittstelle 150 der Schließfachanlage 110 oder über die Eingabeschnittstelle des mobilen Endgeräts 180 erfolgen, oder auch basierend auf einer Interkation der Partei mit dem Server, wie über die Eingabeschnittstelle 150 der Schließfachanlage 110 oder über die Eingabeschnittstelle des mobilen Endgeräts 180 erfolgen. Wenn mehrere Schließfacheinheiten des ausgewählten Schließfachtyps für die Partei zur Verfügung stehen, so können diese Schließfacheinheiten beispielsweise über eine entsprechende Information auf der Anzeigevorrichtung 140 der Schließfacheinheit oder auf der Anzeigevorrichtung des mobilen Endgeräts angezeigt werden.

Die Auswahl einer Schließfacheinheit des auswählten Schließfachtyps kann beispielsweise bevorzugt die Wahl einer Schließfacheinheit umfassen, welche eine für die Partei statisch reservierte Schließfacheinheit darstellt. Somit können beispielsweise für eine Partei zunächst die statisch reservierten Schließfacheinheiten eines bestimmten Schließfachtyps zur Deponierung von Sendungen verwendet werden, und nachfolgend können Schließfacheinheiten des bestimmten Schließfachtyps zum Deponieren verwendet werden, die als solche bestimmte Schließfacheinheiten nicht explizit von der Partei reserviert worden sind, sondern wo eine Reservierung einer Anzahl von Schließfacheinheiten für den bestimmten Schließfachtyp durch die fachtypbezogene Information vorgenommen wurde.

Wenn beispielsweise eine statisch reservierte Schließfacheinheit zur Deponierung der Sendung verwendet wurde, so kann eine entsprechende Information über die belegte statisch reservierte Schließfacheinheit in einer Datenbank in der Schließfachanlage 110 oder dem Server 160 gespeichert werden, so dass diese statisch reservierte Schließfacheinheit als "nicht verfügbar" gekennzeichnet ist und gegebenenfalls bei der Ermittlung der Anzahl der für die Partei zur Verfügung stehenden Schließfacheinheiten für diesen Schließfachtyp für Schritt 210 nicht mehr berücksichtigt wird.

Ferner kann beispielsweise, wenn die Sendung mit einer Schließfacheinheit verknüpft worden ist, welche der Anzahl von dynamisch reservierten Schließfacheinheiten eines Schließfachtyps zugeordnet ist, ein Reduzieren der Anzahl von dynamisch reservierten Schließfacheinheiten dieses Schließfachtyps dieser Partei vorgenommen werden. Dieses Reduzieren kann beispielsweise durch die Rechenverarbeitungseinheit der Schließfachanlage 110 oder durch den Server 160 vorgenommen werden, wobei das Reduzieren das Dekrementieren der Anzahl von dynamisch reservierten Schließfacheinheiten dieses Schließfachtyps der entsprechenden Partei darstellen kann.

Fig. 3b zeigt ein exemplarisches Flußdiagramm eines Verfahrens 300' gemäß einer weiteren beispielhaften Ausführungsform des ersten Aspekts der Erfindung. Dieses Verfahren 300' kann beispielsweise für das in Fig. 2 dargestellte beispielhafte Verfahren verwendet werden und dieses beispielsweise ergänzen.

In Schritt 310 erfolgt das Erfassen einer Identifikation einer Partei, welche eine Sendung in eine Schließfachanlage 110 der mindestens einen Schließfachanlage 110 deponieren möchte. Dieses Erfassen entspricht dem in Bezug auf Fig. 3a erläuterten Erfassen 310.

In Schritt 340 wird basierend auf dem Identifikator, welcher der Sendung physisch zugeordnet ist und welcher in Schritt 230 erfasst wurde, ein Schließfachtyp ermittelt. Beispielsweise kann dieses Ermitteln eines Schließfachtyps basierend auf einem Datenbankeintrag erfolgen, welcher der Identifikationsnummer der Sendung zugeordnet ist und eine Information über die Größe der Sendung oder den Schließfachtyp umfasst. Beispielsweise kann anhand der Information über die Größe der Sendung ein entsprechend passender Schließfachtyp der entsprechenden Schließfachanlage ermittelt werden. Dieser Datenbankeintrag kann beispielsweise Bestandteil einer in der Schließfachanlage 110 oder auf dem Server 160 gespeicherten Datenbank sein. So kann beispielsweise bei der Vornahme einer Reservierung, wie beispielsweise bei der dynamischen Reservierung eines Schließfachtyps durch Inkrementierung der Anzahl von dynamische reservierten Schließfacheinheiten des jeweiligen Schließfachtyps anhand der fachtypbezogenen Information ein Identifikator (wie beispielsweise eine Sendungs-ID) der entsprechenden Sendung erzeugt oder ermittelt werden, und diese mit dem entsprechenden Schließfachtyp verknüpft werden und als Datenbankeintrag gespeichert werden. Anschließend kann beispielweise diese Sendung mit dem entsprechenden Identifikator versehen werden.

Somit kann bei dieser beispielhaften Ausführungsform das Auswählen des Schließfachtyps durch die Partei während des Deponiervorgangs der Sendung an der entsprechenden Schließfachanlage 110 entfallen.

Anschließend kann das Verfahren 300' die endgültige Auswahl einer Schließfacheinheit des ausgewählten Schließfachtyps umfassen, wie bereits zu Verfahren 300 erläutert wurde.

Für sämtliche Ausführungsbeispiele gilt, dass beispielsweise zwei oder mehr Parteien vorgesehen sein können, und jeder der zwei oder mehr Parteien eine Reservierungsinformation für jeweils mindestens eine Schließfachanlage der mindestens einen Schließfachanlage zugeordnet ist. Diese einer der Parteien zugeordnete Reservierungsinformation enthält dementsprechend zumindest eine der entsprechenden Partei zugeordnete fachtypbezogene Information, die für jeden Schließfachtyp von mindestens einem Schließfachtyp der Schließfachanlage eine Information über die Anzahl von dynamisch reservierten Schließfacheinheiten des Schließfachtyps umfasst, und welche darüber optional hinaus eine Information über mindestens eine statisch reservierte Schließfacheinheit der entsprechenden Schließfachanlage enthalten kann. Mindestens eine Partei dieser mehreren Parteien kann beispielsweise einen Logistiker darstellen.

Beispielsweise können den zwei oder mehr Parteien unterschiedliche Prioritäten zugewiesen werden.

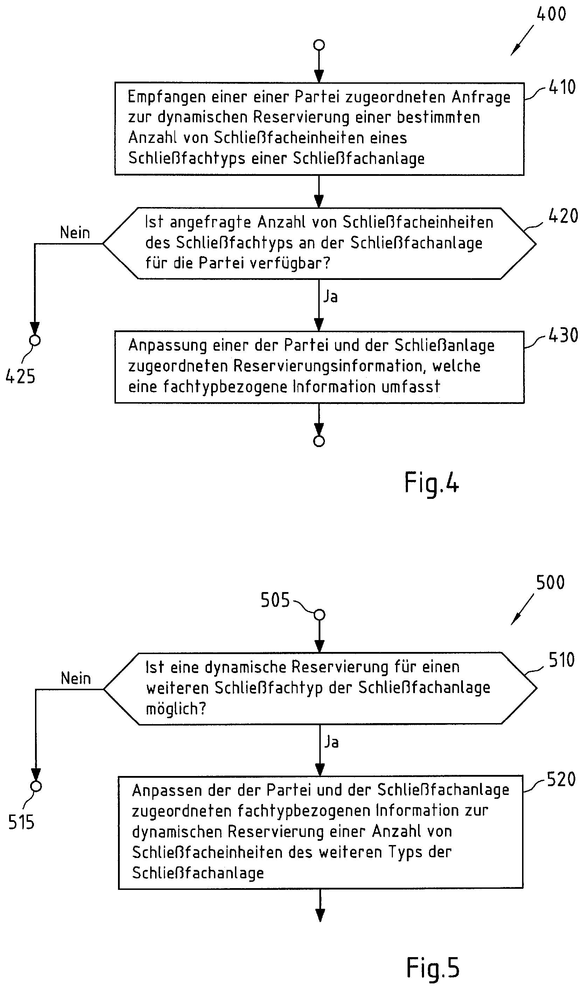

Fig. 4 zeigt ein Flussdiagramm einer ersten beispielhaften Ausführungsform eines Verfahrens 400 gemäß einem zweiten Aspekt der Erfindung.

Dieses Verfahren 400 kann beispielsweise für das in Fig. 1 dargestellte System 100 verwendet werden und zum Betrieb von mindestens einer Schließfachanlage 110 der mindestens einen Schließfachanlage 110 eingesetzt werden, wobei das Verfahren 400 zur Vornahme von Reservierungen für eine oder mehrere Schließfachanlagen 110 eingerichtet ist. Das Verfahren 400 kann beispielsweise, zumindest teilweise oder ganz, durch eine Rechenverarbeitungseinheit einer Schließfacheinheit 110 ausgeführt werden, und/oder zumindest teilweise oder ganz durch eine Rechenverarbeitungseinheit des Servers 160 durchgeführt werden.

In Schritt 410 erfolgt bei der Rechenverarbeitungseinheit ein Empfangen einer einer Partei zugeordneten elektronischen Anfrage zur dynamischen Reservierung einer bestimmten Anzahl von Schließfacheinheiten eines Schließfachtyps einer Schließfachanlage von mindestens einer Schließfachanlage. Beispielsweise kann sich eine Partei solch eine elektronische Anfrage mit einem Endgerät, welches über eine Kommunikationsverbindung, die beispielsweise das Internet umfassen kann, mit der Rechenverarbeitungseinheit verbinden, so dass diese elektronische Anfrage bei der Rechenverarbeitungseinheit empfangen werden kann.

Wie bereits bezüglich der dynamischen Reservierung einer bestimmten Anzahl von Schließfacheinheiten eines Schließfachtyps einer Schließfachanlage für eine Partei hinsichtlich des ersten Aspekts der Erfindung ausgeführt wurde, soll mit der Anfrage zur dynamischen Reservierung einer bestimmten Anzahl von Schließfacheinheiten eines Schließfachtyps einer Schließfachanlage von mindestens einer Schließfachanlage eine Reservierung einer Anzahl von Schließfacheinheiten des bestimmten Schließfachtyps erfolgen, jedoch keine Reservierung von konkreten Schließfacheinheiten dieses Schließfachtyps der Schließfachanlage erfolgen.

In Schritt 420 wird überprüft, ob die angefragte Anzahl von Schließfacheinheiten des Schließfachtyps an der Schließfachanlage für die Partei verfügbar ist. Beispielsweise kann diese Prüfung in Schritt 420 ein Prüfen umfassen, ob von der grundsätzlich zur Verfügung stehenden Anzahl von Schließfacheinheiten des bestimmten Schließfachtyps bei der Schließfachanlage abzüglich von bereits vorgenommenen Reservierungen für diesen Schließfachtyp noch eine genügend große Anzahl von verbleibenden Schließfacheinheit des Schließfachtyps für die Partei zur Verfügung stehen.

Ferner kann beispielsweise das Durchführen des Schritts 420 für eine Partei zur Überprüfung, ob die angefragte Anzahl von Schließfacheinheiten des Schließfachtyps an der Schließfachanlage für die Partei verfügbar ist, zu einem bestimmten Zeitpunkt durchgeführt werden, welche von der jeweiligen Partei abhängt. Sind beispielsweise mehrere Parteien vorhanden, die eine Reservierung vornehmen können, so können beispielsweise den Parteien unterschiedliche Prioritäten zugewiesen sein, wobei beispielsweise bis zu einem bestimmten Zeitpunkt, der z.B. innerhalb eines Zeitrahmens (wie beispielsweise einem Tag oder einer Woche) liegen kann, nur eine Partei mit einer bestimmten Priorität eine dynamische Reservierung vornehmen kann, so dass die Überprüfung in Schritt 420 bis zu diesem Zeitpunkt nur für eine oder mehrere Parteien, die diese bestimmte Priorität aufweisen, durchgeführt werden kann, so dass diese Überprüfung in Schritt 420 eine andere Partei, der eine geringere Priorität als diese bestimmte Priorität zugeordnet ist, erst nach diesem bestimmten Zeitpunkt durchgeführt werden kann. Somit kann ermöglicht werden, dass eine Partei der bestimmten Priorität eine dynamische Reservierung vorrangig durchführen kann, und Parteien, die eine geringere Priorität aufweisen, erst nachrangig dynamisch reservieren dürfen. Es können auch mehrere nacheinander gestaffelte Zeitpunkte, die z.B. innerhalb eines Zeitrahmens (wie beispielsweise einem Tag oder einer Woche) liegen können, wobei jeder der Zeitpunkte einer entsprechenden unterschiedlichen Priorität aus einer Mehrzahl von Prioritäten zugeordnet ist.

Ferner können beispielsweise alternativ bis zu einem bestimmten Zeitpunkt die in Schritt 410 eingehenden Anfragen von einer Partei oder von mehreren Parteien gesammelt werden, wobei anschließend das Durchführen der Überprüfung für jeweils eine Partei, ob die angefragte Anzahl von Schließfacheinheiten des Schließfachtyps an der Schließfachanlage 110 für die Partei verfügbar ist, und die nachfolgenden Schritte bei erfolgreicher oder negativer Prüfung, in der Reihenfolge der Prioritäten der Parteien durchgeführt werden, wobei mit der Partei begonnen wird, welche die höchste Priorität aufweist, und anschließend für die Parteien in Richtung absteigender Priorität jeweils überprüft wird, ob die angefragte Anzahl von Schließfacheinheiten des Schließfachtyps an der Schließfachanlage für die Partei verfügbar ist.

Falls die Überprüfung in Schritt 420 erfolgreich ist so kann das Verfahren 400 mit Schritt 430 zur Anpassung einer der Partei und der Schließfachanlage zugeordneten Reservierungsinformation, welche eine fachtypbezogene Information umfasst, fortfahren, wobei die fachtypbezogene Information für den Schließfachtyp der Schließfacheinheit eine Information über die Anzahl von dynamisch reservierten Schließfacheinheiten des Schließfachtyps umfasst, zur dynamischen Reservierung der bestimmen Anzahl von Schließfacheinheiten des Schließfachtyps der Schließfachanlage. Umfasst die Anfrage beispielsweise eine dynamische Reservierung eine Anzahl von x Schließfacheinheiten eines Schließfachtyps, wobei x eine natürliche Zahl (aus 1,2,3,...) ist, so wird beispielsweise die der Partei zugeordnete Information über die Anzahl von dynamisch reservierten Schließfacheinheiten des Schließfachtyps der Schließfachanlage 110 um die Anzahl x erhöht. Wenn die der Partei vor Durchführung des Schritt 430 zugeordnete Information über die Anzahl von dynamisch reservierten Schließfacheinheiten des Schließfachtyps der Schließfachanlage 110 einer Anzahl von Null reservierten Schließfacheinheiten des Schließfachtyps der Schließfachanlage 110 entspricht, so wird die der Partei und der Schließfachanlage zugeordnete Reservierungsinformation derart angepasst, dass die Information über die Anzahl von dynamisch reservierten Schließfacheinheiten des Schließfachtyps der Schließfachanlage 110 einer Anzahl von x dynamisch reservierten Schließfacheinheiten des Schließfachtyps entspricht. Wenn die der Partei vor Durchführung des Schritt 430 zugeordnete Information über die Anzahl von dynamisch reservierten Schließfacheinheiten des Schließfachtyps der Schließfachanlage 110 einer Anzahl von n (wobei n eine natürliche Zahl darstellt) reservierten Schließfacheinheiten des Schließfachtyps der Schließfachanlage 110 entspricht, so wird die der Partei und der Schließfachanlage zugeordnete Reservierungsinformation derart angepasst, dass die Information über die Anzahl von dynamisch reservierten Schließfacheinheiten des Schließfachtyps der Schließfachanlage 110 einer Anzahl von n+x dynamisch reservierten Schließfacheinheiten des Schließfachtyps entspricht.

Diese Reservierungsinformation kann beispielsweise als Reservierungsinformation für den ersten Aspekt der Erfindung verwendet werden.

Fig. 5 zeigt ein Flussdiagramm einer zweiten beispielhaften Ausführungsform eines Verfahrens 500 gemäß einem zweiten Aspekt der Erfindung, welche beispielsweise für die in Fig. 4 dargestellte erste beispielhafte Ausführungsform des Verfahrens 400 verwendet werden kann.

Beispielsweise kann das Verfahren 500 als Fortsetzung des Verfahrens 400 verwendet werden, wenn in Schritt 420 festgestellt wurde, dass die von der Partei angefragte Anzahl von Schließfacheinheiten an der Schließfachanlage für die Partei nicht verfügbar sind, d.h. das Bezugszeichen 425 in Fig. 4 kann mit dem Bezugszeichen 505 in Fig. 5 verbunden werden.

Es wird angenommen, dass die Schließfachanlage, für welche die Partei durch in Schritt 410 empfangene Anfrage eine dynamische Reservierung vornehmen wollte, verschiedene Typen von Schließfacheinheiten umfassen (d.h. eine Mehrzahl von Schließfacheinheiten), wobei sich die verschiedenen Schließfachtypen beispielsweise in der Form und/oder in der Größe unterschieden, wie bereits zum ersten Aspekt der Erfindung erläutert wurde. Somit kann die Schließfachanlage 110 für jeden der verschiedenen Schließfachtypen eine Anzahl von mindestens einer Schließfacheinheit aufweisen.

In Schritt 510 wird überprüft, ob eine dynamische Reservierung für einen weiteren Schließfachtyp der Schließfachanlage für die Partei möglich ist, wobei sich der weitere Schließfachtyp von dem Schließfachtyp der Anfrage, welcher als erster Schließfachtyp bezeichnet werden kann, unterscheidet. Beispielsweise kann dieser weitere Schließfachtyp ein solcher Schließfachtyp sein, welcher eine größere Größe als der erste Schließfachtyp aufweist, wie beispielsweise eine Nummer größer als der erste Schließfachtyp. Wird beispielsweise festgestellt, dass für die Partei zumindest die Anzahl von mindestens einer Schließfacheinheit des weiteren Schließfachtyps zur Verfügung steht, so ist zumindest eine Reservierung einer Anzahl von zumindest einer Schließfacheinheit des weiteren Schließfachtyps an der Schließfachanlage 110 möglich, und das Verfahren kann in Schritt 520 eine Anpassung der der Partei und der Schließfachanlage zugeordneten fachtypbezogenen Information zur dynamischen Reservierung einer Anzahl von Schließfacheinheiten des weiteren Schließfachtyps der Schließfachanlage vornehmen. Umfasst die Anfrage beispielsweise eine dynamische Reservierung eine Anzahl von x Schließfacheinheiten eines Schließfachtyps, wobei x eine natürliche Zahl (aus 1,2,3,...) ist, und konnte beispielsweise keine der x angefragten Schließfacheinheiten dynamisch reserviert werden, und steht die Anzahl von y Schließfacheinheiten des weiteren Schließfachtyps der Schließfachanlage zur Verfügung, so kann beispielsweise für die Partei die Anzahl von x Schließfacheinheiten des weiteren Typs der Schließfachanalage dynamisch reserviert werden, wenn x kleiner oder gleich y ist, indem die der Partei zugeordnete Information über die Anzahl der dynamisch reservierten Schließfacheinheiten des weiteren Schließfachtyps der Schließfachanlage um eine Anzahl von x Schließfacheinheiten erhöht wird. Oder es kann beispielsweise für die Partei die Anzahl von y Schließfacheinheiten des weiteren Typs der Schließfachanalage dynamisch reserviert werden, wenn x größer als y ist, indem die der Partei zugeordnete Information über die Anzahl der dynamisch reservierten Schließfacheinheiten des weiteren Schließfachtyps der Schließfachanlage um eine Anzahl von y Schließfacheinheiten erhöht wird.

Konnte vorab bereits eine dynamische Reservierung einer Anzahl von z Schließfacheinheiten des ersten Schließfachtyps der Schließfachanlage für die Partei durchgeführt werden, mit z aus den natürlichen Zahlen und z kleiner als x, wobei diese dynamische Reservierung das Erhöhen der der Partei zugordneten Information über die Anzahl der dynamisch reservierten Schließfacheinheiten des ersten Schließfachtyps der Schließfachanlage um eine Anzahl von z Schließfacheinheiten umfasst, so reduziert sich die Anzahl x bei dem zuvor genannten Beispiel um die bereits reservierte Anzahl von z Schließfacheinheiten. Diese dynamische Reservierung einer Anzahl von nur z Schließfacheinheiten des ersten Schließfachtyps für die Partei kann beispielsweise in Verfahren 400 nach Schritt 420 und vor dem Bezugszeichen 425 möglich.

Ferner kann beispielsweise das in Fig. 5 dargestellte Verfahren 500 nur für eine Partei aus einer ersten Gruppe mindestens einer Partei zugelassen sein, während das Verfahren 500 nicht für eine Partei, welche nicht der ersten Gruppe zugeordnet ist, zugelassen ist. Somit kann eine Partei, welche nicht der ersten Gruppe zugeordnet ist, nicht auf einen weiteren Schließfachtyp ausweichen.

Darüberhinaus kann beispielsweise die dynamische Reservierung gemäß Verfahren 500 zur Reservierung für einen weiteren Schließfachtyp nicht für jeden beliebigen weiteren Schließfachtyp zugelassen sein. Ist beispielsweise der erste Schließfachtyp ein Schließfachtyp mit einer bestimmten Mindestgröße, so kann beispielsweise kein weiterer Schließfachtyp mit einer größeren Größe als dieser bestimmten Mindestgröße verwendet werden und das Verfahren 500 endet, wenn es beispielsweise überhaupt gestartet wird, beim Bezugszeichen 515.

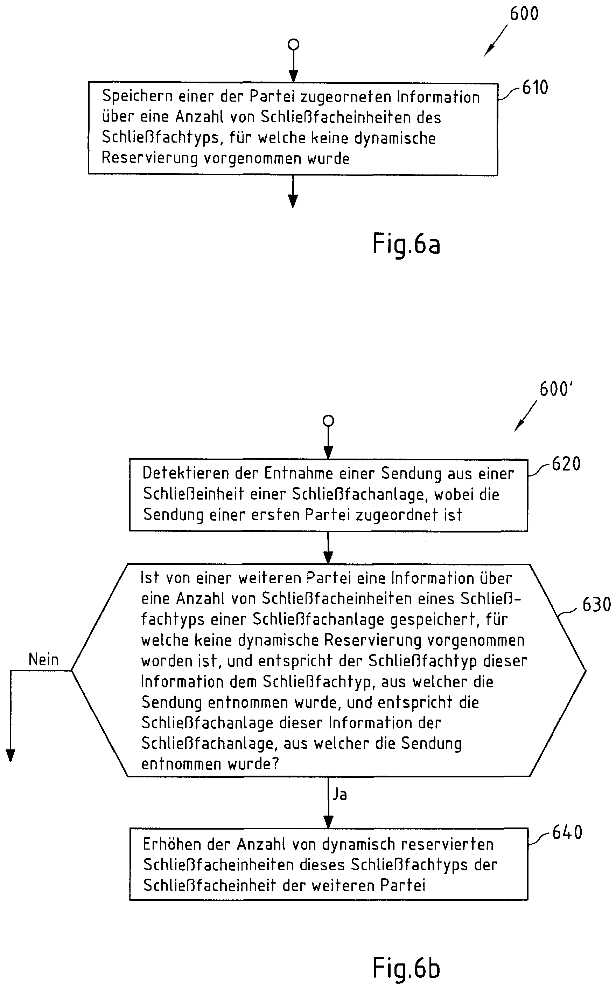

Fig. 6a zeigt ein Flussdiagramm einer dritten beispielhaften Ausführungsform eines Verfahrens 600 gemäß einem zweiten Aspekt der Erfindung. Das Verfahren 600 umfasst in Schritt 610 das Speichern einer der Partei zugeordneten Information über die Anzahl von Schließfacheinheiten des Schließfachtyps der Anfrage, für welche keine dynamische Reservierung vorgenommen wurde.

Das Verfahren 600 kann beispielsweise dann verwendet werden, wenn nicht die vollständige Anzahl x Schließfacheinheiten der Anfrage der Partei dynamisch reserviert werden konnten, wobei diese dynamische Reservierung beispielsweise auch die gegebenenfalls in Schritt 520 reservierte Anzahl von Schließfacheinheiten des weiteren Schließfachtyps umfassen kann. Wurden beispielsweise von der angefragten Anzahl von x Schließfacheinheiten die Anzahl von z Schließfacheinheiten des ersten Schließfachtyps dynamisch reserviert und wurde beispielsweise die Anzahl von y Schließfacheinheiten des weiteren Schließfachtyps für die Partei dynamisch reserviert, so kann die Anzahl von Schließfacheinheiten des Schließfachtyps der Anfrage, für welche keine dynamische Reservierung vorgenommen wurde, der Anzahl x-z-y entsprechen. Somit kann eine Vormerkung dieser verbleibenden Anzahl von nicht dynamisch reservierten Schließfacheinheiten des ersten Schließfachtyps der bestimmten Schließfachanlage für die Partei vorgenommen werden, die später berücksichtigt werden kann, wenn beispielsweise Schließfacheinheiten dieses ersten Schließfachtyps wieder zur Verfügung stehen sollten.

Fig. 6b zeigt ein Flussdiagramm einer vierten beispielhaften Ausführungsform eines Verfahrens 600' gemäß einem zweiten Aspekt der Erfindung, welches beispielsweise ausgeführt werden kann, nachdem das in Fig. 6a dargestellte Verfahren 600 für mindestens eine Partei durchgeführt worden ist.

In Schritt 630 des Verfahrens erfolgt ein Detektieren der Entnahme einer in einer Schließfacheinheit einer Schließfachanlage 110 deponierten Sendung, welche einer ersten Partei zugeordnet ist. Diese Detektion kann basierend auf einem geeigneten Detektionsmittel der entsprechenden Schließfachanlage 110 erfolgen, wobei die eigentliche Detektion in der Rechenverarbeitungseinheit der Schließfachanlage oder in der Rechenverarbeitungseinheit des Servers 160 erfolgen kann.

In Schritt 630 wird geprüft, ob für eine weitere Partei, welche sich von der ersten Partei unterscheidet, eine Information über eine Anzahl von Schließfacheinheiten eines Schließfachtyps einer Schließfachanlage, für welche keine dynamische Reservierung vorgenommen wurde, gespeichert ist, wobei der Schließfachtyp dieser Information dem Schließfachtyp der Schließfachanlage entsprechend muss, aus welchem die Sendung entnommen wurde, und die Schließfachanlage dieser Information der Schließfachanlage, aus welchem die Sendung entnommen wurde, entsprechen muss. Diese Information über eine Anzahl von Schließfacheinheiten eines Schließfachtyps einer Schließfachanlage, für welche keine dynamische Reservierung vorgenommen wurde, kann beispielsweise vorab in Schritt 610 des Verfahrens 600 für diese weitere Partei gespeichert worden sein.

Ist diese Überprüfung in Schritt 630 erfolgreich, so kann ein Anpassen der Reservierungsinformation für die weitere Partei dahingehend erfolgen, dass die der weiteren Partei zugeordnete Information über die Anzahl von dynamisch reservierten Schließfacheinheiten dieses Schließfachtyps der Schließfachanlage inkrementiert wird.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A oder B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Betreiben von mindestens einer elektronischen Schließfachanlage (110), wobei jede Schließfachanlage (110) eine Mehrzahl von Schließfacheinheiten (111, 112, 113, 121, 122, 123, 131, 132, 133) umfasst, umfassend:
- Ermitteln (210) einer Information über mindestens eine Schließfacheinheit (110) einer Schließfachanlage (110) der mindestens einen Schließfachanlage (110) , in welche eine einer Partei zugeordnete Sendung deponiert werden soll, durch eine Rechenverarbeitungseinheit (160), basierend auf einer der Partei zugeordneten Reservierungsinformation für diese Schließfachanlage (110), wobei die der Partei zugeordnete Reservierungsinformation eine fachtypbezogene Information enthält, die für jeden Schließfachtyp von mindestens einem Schließfachtyp der Schließfachanlage eine Information über die Anzahl von dynamisch reservierten Schließfacheinheiten (111, 112, 113, 121, 122, 123, 131, 132, 133) des Schließfachtyps umfasst,
- Auswahl (220) einer Schließfacheinheit (111, 112, 113, 121, 122, 123, 131, 132, 133) der mindestens einen Schließfacheinheit (111, 112, 113, 121, 122, 123, 131, 132, 133) basierend auf der ermittelten bereitgestellten Information;
- Erfassen (230) eines der in die Schließfachanlage (111, 112, 113, 121, 122, 123, 131, 132, 133) zu deponierenden Sendung physisch zugeordneten Identifikators durch Detektionsmittel,
- Verknüpfen (240) des erfassten Identifikators der Sendung mit der ausgewählten Schließfacheinheit (111, 112, 113, 121, 122, 123, 131, 132, 133),
- Detektieren (620) der Entnahme einer in einer Schließfacheinheit (111, 112, 113, 121, 122, 123, 131, 132, 133) der Schließfachanlage (110) der mindestens einen Schließfachanlage (110) deponierten Sendung, welche einer ersten Partei zugeordnet ist,
- Überprüfen (630), ob für eine weitere Partei, welche sich von der ersten Partei unterscheidet, eine Information über eine verbleibende Anzahl von Schließfacheinheiten (111, 112, 113, 121, 122, 123, 131, 132, 133) eines Schließfachtyps der Schließfachanlage (110), für welche keine dynamische Reservierung vorgenommen werden konnte, gespeichert ist, und ob der Schließfachtyp dieser Information dem Schließfachtyp der Schließfachanlage (110) entspricht, aus welchem die Sendung entnommen wurde, und
- bei erfolgreicher Überprüfung (640), Anpassung der der weiteren Partei zugeordneten Reservierungsinformation durch Erhöhen der Anzahl von dynamisch reservierten Schließfacheinheiten (111, 112, 113, 121, 122, 123, 131, 132, 133) dieses Schließfachtyps der Schließfachanlage (110).

2. Verfahren nach Anspruch 1, wobei das Verfahren das Anzeigen einer Anzahl für die Partei zur Verfügung stehenden Schließfacheinheiten (111, 112, 113, 121, 122, 123, 131, 132, 133) der Schließfachanlage (110) für jeweils mindestens einen Schließfachtyp basierend auf der Information über mindestens einer Schließfacheinheit (111, 112, 113, 121, 122, 123, 131, 132, 133) der Schließfachanlage (110) auf mindestens einer Anzeige von folgenden Anzeigen umfasst:
- eine Anzeige (140) der Schließfachanlage; und
- eine Anzeige auf einem mobilen elektronischen Gerät (180), welches zur Nutzung einer Partei eingerichtet ist.

3. Verfahren nach Anspruch 2, **dadurch gekennzeichnet, dass** die Auswahl einer Schließfacheinheit (111, 112, 113, 121, 122, 123, 131, 132, 133) der mindestens einen Schließfacheinheit (111, 112, 113, 121, 122, 123, 131, 132, 133) der Schließfachanlage (110) zumindest teilweise basierend auf der für die Partei angezeigten Anzahl der für die Partei zur Verfügung stehenden Schließfacheinheiten (111, 112, 113, 121, 122, 123, 131, 132, 133) der Schließfachanlage (110) für jeweils mindestens einen Schließfachtyp durch Detektion einer Interaktion eines Zustellers mit der Schließfachanlage (110) erfolgt.

4. Verfahren nach einem der Ansprüche 2 und 3, umfassend das Ermitteln der Anzahl für die Partei zur Verfügung stehenden Schließfacheinheiten (111, 112, 113, 121, 122, 123, 131, 132, 133) der Schließfachanlage (110) für jeweils mindestens einen Schließfachtyp basierend auf mindesten einem vom:
- einer Anzahl von dynamisch reservierten Schließfacheinheiten (111, 112, 113, 121, 122, 123, 131, 132, 133) des Schließfachtyps;
- einer Anzahl von statisch reservierten Schließfacheinheiten (111, 112, 113, 121, 122, 123, 131, 132, 133) des Schließfachtyps;
- einer Anzahl von nicht reservierten Schließfacheinheiten (111, 112, 113, 121, 122, 123, 131, 132, 133) des Schließfachtyps; und
- einer Summe der Anzahl von dynamisch reservierten Schließfacheinheiten (111, 112, 113, 121, 122, 123, 131, 132, 133) des Schließfachtyps, der Anzahl von statisch reservierten Schließfacheinheiten (111, 112, 113, 121, 122, 123, 131, 132, 133) des Schließfachtyps und der Anzahl von nicht reservierten Schließfacheinheiten (111, 112, 113, 121, 122, 123, 131, 132, 133) des Schließfachtyps.

5. Verfahren nach einem der Ansprüche 1 bis 4, wobei bei der Auswahl einer Schließfacheinheit (111, 112, 113, 121, 122, 123, 131, 132, 133) der mindestens einen Schließfacheinheit (111, 112, 113, 121, 122, 123, 131, 132, 133) basierend auf den bereitgestellten Informationen bevorzugt eine solche Schließfacheinheit (111, 112, 113, 121, 122, 123, 131, 132, 133) ausgewählt wird, welche eine für die Partei statisch reservierte Schließfacheinheit (111, 112, 113, 121, 122, 123, 131, 132, 133) darstellt.

6. Verfahren nach einem der Ansprüche 1 bis 5, wobei die Schließfachanlage (110) der mindestens einen Schließfachanlage (110) jeweils eine Mehrzahl von unterschiedlichen Schließfachtypen umfasst, welche sich vorzugsweise in der Größe voneinander unterscheiden, wobei der Schließfachtyp, in welche der Sendung zugeordnet werden soll, basierend auf einem der folgenden ermittelt wird:
- einem der Identifikationsnummer der Sendung zugeordneten Datenbankeintrag, welcher eine Information über die Größe der Sendung oder den Schließfachtyp umfasst;
- einer Eingabe einer Information über die Größe der Sendung oder über den Schließfachtyp an der Schließfachanlage (110); und
- eine Eingabe einer Information über die Größe der Sendung oder den Schließfachtyp auf einem mobilen elektronischen Gerät (180), welches zur Nutzung einer Partei eingerichtet ist.

7. Verfahren nach einem der Ansprüche 2 bis 4, wobei das Anzeigen einer Anzahl für die Partei zur Verfügung stehenden Schließfacheinheiten (111, 112, 113, 121, 122, 123, 131, 132, 133) der Schließfachanlage (110) für jeweils mindestens einen Schließfachtyp basierend auf einer Größe der Sendung oder basierend auf einem der Sendung zugeordneten Schließfachtyps erfolgt.

8. Verfahren nach einem der vorangegangenen Ansprüche, umfassend das Anpassen der der Partei zugeordneten Reservierungsinformation, wenn die Identifikationsnummer der Sendung mit der ausgewählten Schließfacheinheit verknüpft worden ist.

9. Verfahren nach einem der vorangegangen Ansprüche, wobei die der Partei zugeordnete Reservierungsinformation eine Information über mindestens eine statisch reservierte Schließfacheinheit (111, 112, 113, 121, 122, 123, 131, 132, 133) der Schließfachanlage (110) umfasst.

10. Vorrichtung (100) zum Durchführen des Verfahrens gemäß einem der Ansprüche 1 bis 9.

11. Verfahren zum Betreiben von mindestens einer elektronischen Schließfachanlage (110), umfassend:
- Empfangen (410) einer ersten Partei zugeordneten elektronischen Anfrage zur dynamischen Reservierung einer bestimmten Anzahl von Schließfacheinheiten (111, 112, 113, 121, 122, 123, 131, 132, 133) eines Schließfachtyps einer Schließfachanlage (110) von der mindestens einen Schließfachanlage (110),
- Prüfen (420), ob die angefragte Anzahl von Schließfacheinheiten des Schließfachtyps für die erste Partei verfügbar ist, und
- falls die angefragte Anzahl von Schließfacheinheiten (111, 112, 113, 121, 122, 123, 131, 132, 133) des Schließfachtyps für die erste Partei verfügbar ist, Anpassung (430) einer der ersten Partei und der Schließfachanlage (110) zugeordneten Reservierungsinformation, welche eine fachtypbezogene Information umfasst, wobei die fachtypbezogene Information für den Schließfachtyp der Schließfachanlage (110) eine Information über die Anzahl von dynamisch reservierten Schließfacheinheiten (111, 112, 113, 121, 122, 123, 131, 132, 133) des Schließfachtyps umfasst, zur dynamischen Reservierung der bestimmen Anzahl von Schließfacheinheiten (111, 112, 113, 121, 122, 123, 131, 132, 133) des Schließfachtyps der Schließfachanlage (110), und
- falls das Prüfen, ob die angefragte Anzahl von Schließfacheinheiten (111, 112, 113, 121, 122, 123, 131, 132, 133) des Schließfachtyps für die erste Partei verfügbar ist, negativ ausfällt, (i) wenn der ersten Partei zumindest eine Anzahl von Schließfacheinheiten des Schließfachtyps der Schließfachanlage zur Verfügung steht, Durchführung, für die erste Partei, einer dynamischen Reservierung der Anzahl von zur Verfügung stehenden Schließfacheinheiten des Schließfachtyps der Schließfachanlage durch Erhöhen der der ersten Partei zugeordneten Information über die Anzahl der dynamisch reservierten Schließfacheinheiten des Schließfachtyps der Schließfachanlage um die Anzahl der zur Verfügung stehenden von Schließfacheinheiten des Schließfachtyps der Schließfachanlage, und (ii) Speichern (610) einer der ersten Partei zugeordneten Information über die verbleibende Anzahl von Schließfacheinheiten (111, 112, 113, 121, 122, 123, 131, 132, 133) des Schließfachtyps der Schließfachanlage (110) der Anfrage, für welche keine dynamische Reservierung vorgenommen werden konnte.

12. Verfahren nach Anspruch 11, wobei der der Anfrage zugeordnete Schließfachtyp ein erster Schließfachtyp der Schließfachanlage (110) darstellt, und die Schließfachanlage (110) mindestens einen weiteren Schließfachtyp umfasst, wobei das Verfahren ferner das Prüfen (510) umfasst, ob eine dynamische Reservierung für einen weiteren Schließfachtyp der Schließfachanlage (110), der sich vom ersten Schließfachtyp unterscheidet, möglich ist, wenn die angefragte Anzahl von Schließfacheinheiten des Schließfachtyps für die erste Partei nicht verfügbar ist.

13. Verfahren nach Anspruch 12, umfassend, falls das Prüfen (510), ob eine dynamische Reservierung von mindestens einem weiteren Schließfachtyp der Schließfachanlage (110), der sich vom ersten Schließfachtyp unterscheidet, möglich ist, positiv ausfällt, das Anpassen (520) der der ersten Partei und der Schließfachanlage (110) zugeordneten fachtypbezogenen Information zur dynamischen Reservierung einer Anzahl von Schließfacheinheiten (111, 112, 113, 121, 122, 123, 131, 132, 133) des weiteren Schließfachtyps der Schließfachanlage (110), wobei die fachtypbezogene Information für den weiteren Schließfachtyp der Schließfachanlage (110) eine Information über die Anzahl von dynamisch reservierten Schließfacheinheiten (111, 112, 113, 121, 122, 123, 131, 132, 133) des weiteren Schließfachtyps umfasst.

14. Verfahren nach einem der Ansprüche 11 bis 13, umfassend, das Detektieren der Entnahme einer in einer Schließfacheinheit einer Schließfachanlage deponierten Sendung, welche einer weiteren Partei zugeordnet ist, und, wenn für die erste Partei eine Information über eine Anzahl von Schließfacheinheiten eines Schließfachtyps einer Schließfachanlage, für welche keine dynamische Reservierung vorgenommen wurde, gespeichert ist, und wenn der Schließfachtyp dieser Information dem Schließfachtyp der Schließfachanlage, aus welchem die Sendung entnommen wurde, entspricht und wenn die Schließfachanlage dieser Information der Schließfachanlage, aus welchem die Sendung entnommen wurde, entspricht, ein Erhöhen der Anzahl von dynamisch reservierten Schließfacheinheiten dieses Schließfachtyps der Schließfachanlage der ersten Partei.

15. Vorrichtung (160) zum Durchführen des Verfahrens gemäß einem der Ansprüche 11 bis 14.

## Claims

1. Method for operating at least one electronic lock box facility (110), each lock box facility (110) comprising a plurality of lock box units (111, 112, 113, 121, 122, 123, 131, 132, 133), comprising:
- Determining (210) information about at least one lock box unit (110) of a lock box facility (110) of the at least one lock box facility (110) into which a shipment assigned to a party is to be deposited, by a computing unit (160), based on reservation information assigned to the party for this lock box facility (110), wherein the reservation information assigned to the party contains lock box type-related information which, for each lock box type of at least one lock box type of the lock box facility, contains information about the number of dynamically reserved lock box units (111, 112, 113, 121, 122, 123, 131, 132, 133) of the lock box type,
- selection (220) of a lock box unit (111, 112, 113, 121, 122, 123, 131, 132, 133) from the at least one lock box unit (111, 112, 113, 121, 122, 123, 131, 132, 133) based on the determined information provided;
- Detecting (230) one of the identifiers physically assigned to the shipment to be deposited in the lock box facility (111, 112, 113, 121, 122, 123, 131, 132, 133) by means of detection means,
- Linking (240) the detected identifier of the shipment to the selected lock box unit (111, 112, 113, 121, 122, 123, 131, 132, 133),
- Detecting (620) the removal of an identifier (111, 112, 121, 122, 123, 131, 132, 133) from a lock box unit (111, 112, 1113, 121, 122, 123, 131, 132, 133) of the lock box facility (110) of the at least one lock box facility (110) which is assigned to a first party,
- Checking (630) whether information about a remaining number of lock box units (111, 112, 113, 121, 122, 123, 131, 132, 133) of a lock box type of the lock box facility (110) for which no dynamic reservation could be made is stored for a further party which is different from the first party, and whether the lock box type of this information corresponds to the lock box type of the lock box facility (110) from which the shipment was removed, and
- if the check is successful (640), adjusting the reservation information assigned to the other party by increasing the number of dynamically reserved lock box units (111, 112, 113, 121, 122, 123, 131, 132, 133) of this lock box type of the lock box facility (110).

2. Method according to claim 1, wherein the method comprises displaying a number of lock box units (111, 112, 113, 121, 122, 123, 131, 132, 133) of the lock box facility (110) for at least one lock box type based on the information about at least one lock box unit (111, 112, 113, 121, 122, 123, 131, 132, 133) of the lock box facility (110) on at least one of the following displays:
- a display (140) of the lock box facility; and
- a display on a mobile electronic device (180) which is set up for use by a party.

3. Method according to claim 2, **characterized in that** the selection of a lock box unit (111, 112, 113, 121, 122, 123, 131, 132, 133) of the at least one lock box unit (111, 112, 113, 121, 122, 123, 131, 132, 133) of the lock box facility (110) is at least partially based on the number of lock box units (111, 112, 113, 121, 122, 123, 131, 132, 133) of the lock box facility (110) for at least one lock box type in each case by detecting an interaction of a delivery person with the lock box facility (110).

4. Method according to one of claims 2 and 3, comprising determining the number of lock box units (111, 112, 113, 121, 122, 123, 131, 132, 133) of the lock box facility (110) for at least one lock box type based on at least one of the following:
- a number of dynamically reserved lock box units (111, 112, 113, 121, 122, 123, 131, 132, 133) of the lock box type;
- a number of statically reserved lock box units (111, 112, 113, 121, 122, 123, 131, 132, 133) of the lock box type;
- a number of non-reserved lock box units (111, 112, 113, 121, 122, 123, 131, 132, 133) of the lock box type; and
- a sum of the number of dynamically reserved lock box units (111, 112, 113, 121, 122, 123, 131, 132, 133) of the lock box type, the number of statically reserved lock box units (111, 112, 113, 121, 122, 123, 131, 132, 133) of the lock box type and the number of non-reserved lock box units (111, 112, 113, 121, 122, 123, 131, 132, 133) of the lock box type.

5. Method according to one of claims 1 to 4, wherein, when selecting a lock box unit (111, 112, 113, 121, 122, 123, 131, 132, 133) of the at least one lock box unit (111, 112, 113, 121, 122, 123, 131, 132, 133) is selected based on the information provided, preferably a lockable lock box unit (111, 112, 113, 121, 122, 123, 131, 132, 133) which represents a lock box unit (111, 112, 113, 121, 122, 123, 131, 132, 133) statically reserved for the party.

6. Method according to one of claims 1 to 5, wherein the lock box facility (110) of the at least one lock box facility (110) comprises a plurality of different lock box types, which preferably differ in size, wherein the lock box type to which the shipment is to be assigned is determined based on one of the following:
- a database entry assigned to the identification number of the shipment, which comprises information about the size of the shipment or the lock box type;
- an entry of information about the size of the shipment or the lock box type at the lock box facility (110); and
- an entry of information about the size of the shipment or the type of locker on a mobile electronic device (180) which is set up for use by a party.

7. Method according to any of claims 2 to 4, wherein the display of a number of lock box units (111, 112, 113, 121, 122, 123, 131, 132, 133) of the lock box facility (110) for at least one lock box type is based on a size of the shipment or based on a lock box type assigned to the shipment.

8. Method according to one of the preceding claims, comprising adapting the reservation information assigned to the party if the identification number of the shipment has been linked to the selected lock box unit.

9. Method according to one of the preceding claims, wherein the reservation information assigned to the party comprises information about at least one ly statically reserved lock box unit (111, 112, 113, 121, 122, 123, 131, 132, 133) of the lock box facility (110).

10. Device (100) for carrying out the method according to one of claims 1 to 9.

11. Method for operating at least one electronic lock box facility (110), comprising:
- Receiving (410) an electronic request assigned to a first party for the dynamic reservation of a certain number of lock box units (111, 112, 113, 121, 122, 123, 131, 132, 133) of a lock box type of a lock box facility (110) from the at least one lock box facility (110),
- checking (420) whether the requested number of lock box units of the lock box type is available for the first party, and
- if the requested number of lock box units (111, 112, 113, 121, 122, 123, 131, 132, 133) of the lock box type is available for the first party, adjustment (430) of reservation information assigned to one of the first party and the lock box facility (110), which comprises lock box type-related information, wherein the lock box type-related information for the lock box type of the lock box facility (110) comprises information about the number of dynamically reserved lock box units (111, 112, 113, 121, 122, 123, 131, 132, 133) of the lock box type for dynamically reserving the specified number of lock box units (111, 112, 113, 121, 122, 123, 131, 132, 133) of the lock box type of the lock box facility (110), and
- if checking whether the requested number of lock box units (111, 112, 113, 121, 122, 123, 131, 132, 133) of the lock box type for the first party is negative, (i) if at least one number of lock box units of the lock box type of the lock box facility is available to the first party, , for the first party, of a dynamic reservation of the number of available lock box units of the lock box type of the lock box facility by increasing the information assigned to the first party about the number of dynamically reserved lock box units of the lock box type of the lock box facility by the number of available lock box units of the lock box type of the lock box facility, and (ii) storing (610) information assigned to the first party about the remaining number of lock box units (111, 112, 113, 121, 122, 123, 131, 132, 133) of the lock box type of the lock box facility (110) of the request for which no dynamic reservation could be made.

12. Method according to claim 11, wherein the lock box type assigned to the request represents a first lock box type of the lock box facility (110), and the lock box facility (110) comprises at least one further lock box type, wherein the method further comprises checking (510) whether a dynamic reservation for a further lock box type of the lock box facility (110) that differs from the first lock box type is possible if the requested number of lock box units of the lock box type is not available for the first party.

13. Method according to claim 12, comprising, if the check (510) whether a dynamic reservation of at least one further lock box type of the lock box facility (110) which differs from the first lock box type is possible is positive, the adaptation (520) of the lock box type-related information assigned to the first party and the lock box facility (110) for dynamic reservation of a number of lock box units (111, 112, 113, 121, 122, 123, 131, 132, 133) of the further lock box type of the lock box facility (110) is positive, wherein the lock box-type-related information for the further lock box type of the lock box facility (110) includes information about the number of dynamically reserved lock box units (111, 112, 113, 121, 122, 123, 131, 132, 133) of the further lock box type.

14. Method according to one of claims 11 to 13, comprising detecting the removal of a consignment deposited in a lock box unit of a lock box facility, which is assigned to a further party, and, if information about a number of lock box units of a lock box type of a lock box facility for which no dynamic reservation has been made is stored for the first party, and if the lock box type of this information corresponds to the lock box type of the lock box facility from which the item was removed, and if the lock box facility of this information corresponds to the lock box facility from which the item was removed, increasing the number of dynamically reserved lock box units of this lock box type of the lock box facility of the first party.

15. Apparatus (160) for carrying out the method according to one of claims 11 to 14.

## Revendications

1. Procédé pour exploiter au moins une installation électronique de boîtes postales (110), dans lequel chaque installation de boîtes postales (110) comprend une pluralité d'unités de boîte postale (111, 112, 113, 121, 122, 123, 131, 132, 133), comprenant les étapes consistant à :
- déterminer (210), par une unité de calcul (160), une information concernant au moins une unité de boîtes postales (110) d'une installation de boîtes postales (110) de la au moins une installation de boîtes postales (110), dans laquelle un envoi associé à une partie doit être déposé, sur la base d'une information de réservation associée à la partie pour cette installation de boîtes postales (110), dans lequel l'information de réservation associée à la partie contient une information associée à un type qui comprend, pour chaque type de boîte postale d'au moins un type de boîte postale de l'installation de boîtes postales, une information concernant le nombre d'unités de boîte postale (111, 112, 113, 121, 122, 123, 131, 132, 133) réservées dynamiquement du type de boîte postale,
- sélectionner (220) une unité de boîte postale (111, 112, 113, 121, 122, 123, 131, 132, 133) de la au moins une unité de boîte postale (111, 112, 113, 121, 122, 123, 131, 132, 133) sur la base de l'information fournie déterminée,
- acquérir (230), par des moyens d'acquisition, un identifiant physiquement associé à l'envoi à déposer dans l'installation de boîtes postales (111, 112, 113, 121, 122, 123, 131, 132, 133),
- rattacher (240) l'identifiant acquis de l'envoi à l'unité de boîte postale (111, 112, 113, 121, 122, 123, 131, 132, 133) sélectionnée,
- détecter (620) le retrait d'un envoi déposé dans une unité de boîte postale (111, 112, 113, 121, 122, 123, 131, 132, 133) de l'installation de boîtes postales (110) de la au moins une installation de boîtes postales (110), lequel envoi est associé à une première partie,
- vérifier (630) que, pour une autre partie qui est différente de la première partie, une information concernant un nombre restant d'unités de boîte postale (111, 112, 113, 121, 122, 123, 131, 132, 133) d'un type de boîte postale de l'installation de boîtes postales (110) pour lequel aucune réservation dynamique n'a pu être effectuée, est stockée, et que le type de boîte postale de cette information correspond au type de boîte postale de l'installation de boîtes postales (110) de laquelle l'envoi a été retiré, et
- en cas de vérification réussie (640), adapter l'information de réservation associée à l'autre partie en augmentant le nombre d'unités de boîte postale (111, 112, 113, 121, 122, 123, 131, 132, 133) réservées dynamiquement de ce type de boîte postale de l'installation de boîtes postales (110).

2. Procédé selon la revendication 1, dans lequel le procédé comprend d'afficher un nombre d'unités de boîte postale (111, 112, 113, 121, 122, 123, 131, 132, 133) disponibles de l'installation de boîtes postales (110) de la partie pour respectivement au moins un type de boîte postale, sur la base de l'information concernant au moins une unité de boîte postale (111, 112, 113, 121, 122, 123, 131, 132, 133) de l'installation de boîtes postales (110), sur au moins un affichage parmi les affichages suivants :
- un affichage (140) de l'installation de boîtes postales, et
- un affichage sur un appareil électronique mobile (180) qui est configuré pour l'utilisation par une partie.

3. Procédé selon la revendication 2, **caractérisé en ce que** la sélection d'une unité de boîte postale (111, 112, 113, 121, 122, 123, 131, 132, 133) de la au moins une unité de boîte postale (111, 112, 113, 121, 122, 123, 131, 132, 133) de l'installation de boîtes postales (110) s'effectue au moins en partie sur la base du nombre affiché pour la partie des unités de boîte postale (111, 112, 113, 121, 122, 123, 131, 132, 133) disponibles pour la partie de l'installation de boîtes postales (110) pour respectivement au moins un type de boîte postale, en détectant une interaction d'un expéditeur avec l'installation de boîtes postales (110).

4. Procédé selon l'une des revendications 2 et 3, comprenant de déterminer le nombre d'unités de boîte postale (111, 112, 113, 121, 122, 123, 131, 132, 133) de l'installation de boîtes postales (110) disponibles pour la partie pour respectivement au moins un type de boîte postale, sur la base d'au moins un des éléments suivants :
- un nombre d'unités de boîte postale (111, 112, 113, 121, 122, 123, 131, 132, 133) réservées dynamiquement du type de boîte postale,
- un nombre d'unités de boîte postale (111, 112, 113, 121, 122, 123, 131, 132, 133) réservées statiquement du type de boîte postale,
- un nombre d'unités de boîte postale non réservées (111, 112, 113, 121, 122, 123, 131, 132, 133) du type de boîte postale, et
- une somme du nombre d'unités de boîte postale (111, 112, 113, 121, 122, 123, 131, 132, 133) réservées dynamiquement du type de boîte postale, du nombre d'unités de boîte postale (111, 112, 113, 121, 122, 123, 131, 132, 133) réservées statiquement et du nombre d'unités de boîte postale (111, 112, 113, 121, 122, 123, 131, 132, 133) non réservées du type de boîte postale.

5. Procédé selon l'une des revendications 1 à 4, dans lequel lors de la sélection d'une unité de boîte postale (111, 112, 113, 121, 122, 123, 131, 132, 133) de la au moins une unité de boîte postale (111, 112, 113, 121, 122, 123, 131, 132, 133), sur la base des informations fournies, une telle unité de boîte postale (111, 112, 113, 121, 122, 123, 131, 132, 133) qui représente une unité de boîte postale (111, 112, 113, 121, 122, 123, 131, 132, 133) réservée statiquement pour la partie, est de préférence sélectionnée.

6. Procédé selon l'une des revendications 1 à 5, dans lequel l'installation de boîtes postales (110) de la au moins une installation de boîtes postales (110) comprend respectivement une pluralité de différents types de boîte postale, qui diffèrent de préférence les uns des autres par leur taille, dans lequel le type de boîte postale dans lequel l'envoi doit être associé, est déterminé sur la base de l'un des éléments suivants :
- une entrée de base de données associée au numéro d'identification de l'envoi, qui comprend une information concernant la taille de l'envoi ou le type de boîte postale,
- une entrée d'une information concernant la taille de l'envoi ou concernant le type de boîte postale sur l'installation de boîtes postales (110), et
- une entrée d'une information concernant la taille de l'envoi ou le type de boîte postale sur un appareil électronique mobile (180) qui est conçu pour l'utilisation par une partie.

7. Procédé selon l'une des revendications 2 à 4, dans lequel l'affichage d'un nombre d'unités de boîte postale (111, 112, 113, 121, 122, 123, 131, 132, 133) de l'installation de boîtes postales (110) disponibles pour la partie est effectué pour respectivement au moins un type de boîte postale, sur la base d'une taille de l'envoi ou sur la base d'un type de boîte postale associé à l'envoi.

8. Procédé selon l'une des revendications précédentes, comprenant d'adapter l'information de réservation associée à la partie lorsque le numéro d'identification de l'envoi a été rattaché à l'unité de boîte postale sélectionnée.

9. Procédé selon l'une des revendications précédentes, dans lequel l'information de réservation associée à la partie comprend une information concernant au moins une unité de boîte postale (111, 112, 113, 121, 122, 123, 131, 132, 133) réservée statiquement de l'installation de boîtes postales (110).

10. Dispositif (100) pour mettre en œuvre le procédé selon l'une des revendications 1 à 9.

11. Procédé pour exploiter au moins une installation électronique de boîtes postales (110), comprenant les étapes consistant à :
- recevoir (410) une demande électronique associée à une première partie pour la réservation dynamique d'un certain nombre d'unités de boîte postale (111, 112, 113, 121, 122, 123, 131, 132, 133) d'un type de boîte postale d'une installation de boîtes postales (110), provenant de la au moins une installation de boîtes postales (110),
- vérifier (420) que le nombre demandé d'unités de boîte postale du type de boîte postale est disponible pour la première partie, et
- si le nombre demandé d'unités de boîte postale (111, 112, 113, 121, 122, 123, 131, 132, 133) du type de boîte postale est disponible pour la première partie, adapter (430) une information de réservation associée à la première partie et à l'installation de boîtes postales (110), laquelle information comprend une information relative au type de boîte postale, dans lequel l'information relative au type de boîte postale pour le type de boîte postale de l'installation de boîtes postales (110) comprend une information concernant le nombre d'unités de boîte postale (111, 112, 113, 121, 122, 123, 131, 132, 133) réservées dynamiquement du type de boîte postale, pour la réservation dynamique du nombre déterminé d'unités de boîte postale (111, 112, 113, 121, 122, 123, 131, 132, 133) du type de boîte postale de l'installation de boîtes postales (110), et
- si la vérification de la disponibilité du nombre demandé d'unités de boîte postale (111, 112, 113, 121, 122 , 123, 131, 132, 133) du type de boîte postale est négative pour la première partie, (i) lorsque la première partie a à sa disposition au moins un nombre d'unités de boîte postale du type de boîte postale de l'installation de boîtes postales, effectuer, pour la première partie, une réservation dynamique du nombre d'unités de boîte postale disponibles du type de boîte postale de l'installation de boîtes postales, en augmentant l'information associée à la première partie concernant le nombre d'unités de boîte postale réservées dynamiquement du type de boîte postale de l'installation de boîtes postales, du nombre d'unités de boîte postale du type de boîte postale de l'installation de boîtes postales disponibles, et (ii) stocker (610) une information associée à la première partie concernant le nombre restant d'unités de boîte postale (111, 112, 113, 121, 122, 123, 131, 132, 133) du type de boîte postale de l'installation de boîtes postales (110) de la demande pour laquelle aucune réservation dynamique n'a pu être effectuée.

12. Procédé selon la revendication 11, dans lequel le type de boîte postale associé à la demande constitue un premier type de boîte postale de l'installation de boîtes postales (110) et l'installation de boîtes postales (110) comprend au moins un type de boîte postale supplémentaire, dans lequel le procédé comprend en outre de vérifier (510) si une réservation dynamique est possible pour un type de boîte postale (110) supplémentaire de l'installation de boîtes postales, qui est différent du premier type de boîte postale, lorsque le nombre demandé d'unités de boîte postale du type de boîte postale n'est pas disponible pour la première partie.

13. Procédé selon la revendication 12, comprenant, si la vérification (510) de la possibilité d'une réservation dynamique d'au moins un type de boîte postale supplémentaire de l'installation de boîtes postales (110), qui est différent du premier type de boîte postale, est positive, d'adapter (520) l'information relative au type de boîte postale associé à la première partie et à l'installation de boîtes postales (110) pour la réservation dynamique d'un nombre d'unités de boîtes postales (111, 112, 113, 121, 122, 123, 131, 132, 133) du type de boîte postale supplémentaire de l'installation de boîtes postales, dans lequel l'information relative au type de boîte postale comprend une information concernant le nombre d'unités de boîte postale (111, 112, 113, 121, 122, 123, 131, 132, 133) réservées dynamiquement du type de boîte postale supplémentaire.

14. Procédé selon l'une des revendications 11 à 13, comprenant de détecter le retrait d'un envoi déposé dans une unité de boîte postale d'une installation de boîtes postales, qui est associé à une autre partie et, lorsqu'une information concernant un nombre d'unités de boîte postale d'un type de boîte postale d'une installation de boîtes postales, pour la première partie, pour lequel aucune réservation dynamique n'a été effectuée, est stockée, et lorsque le type de boîte postale de cette information correspond au type de boîte postale de l'installation de boîtes postales dont l'envoi a été retiré, et lorsque l'installation de boîtes postales de cette information correspond à l'installation de boîtes postales de laquelle l'envoi a été retiré, augmenter le nombre d'unités de boîte postale réservées dynamiquement de ce type de boîte postale de l'installation de boîtes postales de la première partie.

15. Dispositif (160) pour mettre en œuvre le procédé selon l'une des revendications 11 à 14.
